# EUROPÄISCHE PATENTSCHRIFT

(11) **EP 3 999 677 B1**
(45) Veröffentlichungstag und Bekanntmachung des Hinweises auf die Patenterteilung: **14.06.2023**
(21) Anmeldenummer: 20742245.2
(22) Anmeldetag: 16.07.2020
(51) Int. Cl.: D01D 5/098, D04H 3/009, D01F 8/16, D01F 8/06, B32B 27/40, B32B 27/32, B32B 27/12, B32B 27/08, B32B 5/08, B32B 5/02, D04H 3/147

(54) **BIKOMPONENTENFASERSPINNVLIES UND VERBUNDFOLIE MIT BIKOMPONENTENFASERSPINNVLIES**
BICOMPONENT FIBER-SPUN-BONDED FABRIC AND COMPOSITE FILM HAVING BICOMPONENT FIBER-SPUN-BONDED FABRIC
NON-TISSÉ DE FIBRE À DEUX COMPOSANTS ET FEUILLE COMPOSITE COMPRENANT UN NON-TISSÉ DE FIBRE À DEUX COMPOSANTS

(30) Priorität: 17.07.2019 DE 102019119318
(43) Veröffentlichungstag der Anmeldung: 25.05.2022
(73) Patentinhaber: EWALD DÖRKEN AG, 58313 Herdecke (DE)
(72) Erfinder: CONCAS, Massimo, 58300 Wetter / Ruhr (DE); GERACE, Vasco, 58089 Hagen (DE); HARFMANN, Carsten, 60323 Frankfurt (DE); BACHON, Thomas, 40597 Düsseldorf (DE)
(74) Vertreter: Von Rohr Patentanwälte Partnerschaft mbB
(86) Internationale Anmeldenummer: PCT/EP2020/070092
(87) Internationale Veröffentlichungsnummer: WO 2021/009272

(56) Entgegenhaltungen:
- EP-A1- 3 345 757
- US-A1- 2021 308 998

## Beschreibung

Die vorliegende Erfindung betrifft ein Spinnvlies, aufweisend wenigstens eine Bikomponentenfaser aus einer ersten Komponente und einer zweiten Komponente, wobei die erste Komponente ein erstes Polymer und die zweite Komponente ein sich vom ersten Polymer unterscheidendes zweites Polymer als Bestandteil aufweist.

Des Weiteren betrifft die vorliegende Erfindung eine Verbundfolie, aufweisend mindestens eine Trägerschicht aus einem Spinnvlies der vorgenannten Art sowie mindestens eine, insbesondere wasserdichte und wasserdampfdurchlässige, Funktionsschicht, vorzugsweise vorgesehen zur Verwendung im Bereich der Bauwirtschaft und/oder als Baufolie.

Verbundfolien, die im Bereich der Bauwirtschaft eingesetzt werden, dienen zum Schutz von Gebäuden, Baumaterialien und/oder zur Abdeckung, insbesondere von Gebäuden. Insbesondere können Verbundfolien als Fassadenbahnen, Baufolien und/oder Dachbahnen eingesetzt werden. Darüber hinaus können Verbundfolien jedoch auch in weiteren Bereichen, beispielsweise in der Landwirtschaft, als Geotextil und/oder im Bereich der Verpackungsindustrie, eingesetzt werden.

Im Allgemeinen dienen Verbundfolien zum Werterhalt von Gütern, insbesondere Gebäuden und/oder Baumaterialien. Beispielsweise kann die Verbundfolie zum Schutz vor der Witterung, insbesondere zum Schutz vor Regen, Schnee, Feuchtigkeit, Kälte, Wärme und/oder Wind, eingesetzt werden. Folglich kann die Verbundfolie auch als Schutzfolie bezeichnet werden.

Hierzu müssen Verbundfolien zum einen wasserdicht, zum anderen aber wasserdampfdurchlässig sein, um auf diese Weise eine diffusionsoffene, jedenfalls aber diffusionsbremsende, und dennoch wasserdichte Ausführung des Gebäudes bzw. des Unterdaches gewährleisten zu können. Gerade für die Dachkonstruktion ist ein Schutz vor Feuchtigkeit (z.B. durch Kondensat unterhalb der Dacheindeckung), Flugschnee und Schmutz wichtig. Für die Schutzfunktion ist es unabdingbar, dass die Funktionsschicht bzw. Membran weder durch äußere mechanische Einwirkung noch durch extrem lange Freibewitterung, hohe Temperatur, Mikroorganismen, Hydrolyse oder durch Korrosion auslösende Medien angegriffen und zerstört wird.

Aus der Praxis sind verschiedene Verbundfolien bekannt, die einen Mehrschichtaufbau bzw. einen Aufbau aus mehreren Lagen aufweisen. Hierbei stellt insbesondere die Funktionsschicht der Verbundfolie, die mit dem Spinnvlies verbunden sein kann, die Wasserdichtigkeit, die Wasserdampfdurchlässigkeit und/oder die Winddichtigkeit der Verbundfolie sicher. Außenseitige Schutzschichten bzw. Trägerschichten dienen zum Schutz der Funktionsschicht, insbesondere bei mechanischer Beanspruchung. Diese Schutzschichten können als eine, vorzugsweise thermoverfestigte oder nadel- oder nassstrahlverfestigte, Vliesschicht, insbesondere als Spinnvlies, ausgebildet sein.

Im Hinblick auf die Funktionsschicht bzw. Membran, auch als Membranschicht bezeichnet, wird zwischen zwei verschiedenen Arten unterschieden. Eingesetzt werden zum einen mikroporöse Membranen und zum anderen monolithische Membranen als wasserdampfdiffusionsoffene oder -bremsende Funktionsschicht. Diese werden üblicherweise als zweilagiger Verbund der Funktionsschicht mit einer Trägerschicht, insbesondere dem Spinnvlies, ausgestattet.

Nachfolgend werden die Begriffe Membran und Membranschicht synonym verwendet.

Mikroporöse Membranen bestehen häufig aus einem hydrophoben Polymer (z.B. Polyethylen oder Polypropylen) mit kleinen Poren. Der Wassertransport erfolgt hierbei gemäß der sogenannten Knudsendiffusion. Die Poren sind so dimensioniert, dass einzelne Wassermoleküle durch die Membran hindurchgelangen, Wasser unter Normalbedingungen, das heißt bis zu einer Wassersäule von 20 m, jedoch nicht.

Monolithische Membranen stellen im Gegensatz dazu porenfreie Funktionsschichten dar, bei denen der Wasserdampftransport über Sorptions- und Diffusionsprozesse erfolgt. Übliche Polymere für den Einsatz in monolithischen Membranen bzw. Funktionsschichten von Mehrschichtverbundfolien für den Baubereich sind u.a. thermoplastische Polyurethane (TPU) auf Basis von Polyether- oder Polyesterurethanen.

In Bezug auf die Schutzschicht, welche als Spinnvlies ausgestaltet sein kann, werden üblicherweise Vliese auf Basis von Monokomponentenfasern, bspw. Polyolefinen oder Polyestern, eingesetzt. Darüber hinaus ist für die Herstellung von Spinnvliesen auch die Verwendung von Bikomponentenfasern, bspw. Polyolefin-Polyester-Bikomponentenfasern, in der Praxis bekannt.

Generell sind wichtige Eigenschaften eines als Schutz- bzw. Trägerschicht fungierenden Vlieses seine spezifische Reißfestigkeit sowie Nagelausreißfestigkeit. Gleichsam ist die Verfestigbarkeit des Vliesmaterials bzw. der Vliesfaser von Bedeutung, um eine gewisse Spinnstabilität sowie Dehnbarkeit der Fasern und somit des Vlieses zu gewährleisten.

Monokomponentenfasern weisen hierbei generell ein spezifisches, jedoch gleichsam begrenztes Spektrum an Eigenschaften auf. Oft lässt dies wenig Spielraum für spezielle Optimierungen des entsprechenden Monokomponentenfaservlieses, etwa im Hinblick auf eine Anpassung von Festigkeit, Dehnfähigkeit oder Beständigkeit gegenüber äußeren Einflüssen.

Ein anderer wichtiger sowie häufig problematischer Aspekt, insbesondere mit Blick auf Verbundfolien mit Monokomponentenfaservliesen, ist die zuverlässige sowie haltbare Verbindbarkeit von Vlies, insbesondere Spinnvlies, und Funktionsschicht.

Die Haftung zwischen aus dem Stand der Technik bekannten Spinnvliesen und Funktionsschichten ist häufig mangelhaft, sodass Haftvermittler- und/oder Klebstoffschichten zur dauerhaften und belastbaren Verbindung des Spinnvlieses mit der Funktionsschicht unabdingbar sind. Nachteilig ist hierbei, dass die Haft- und/oder Klebstoffschicht jedoch insbesondere auch die Eigenschaften, darunter vor allem die Wasserdampfdurchlässigkeit, der Verbundfolie negativ beeinflussen kann. Gleichsam ist ein dauerhafter und belastbarer Verbund unter anderem maßgeblich für eine prozesssichere Produktion des Vlieses selbst sowie auch der Verbundfolie und gewährleistet die verlässliche Haltbarkeit sowie Widerstandsfähigkeit der Verbundfolie gegenüber äußeren Einflüssen.

Gegenüber der Verwendung von Monokomponentenfaservliesen ist auch die Verwendung von Bikomponentenfasern in Spinnvliesen bekannt. Hierbei ist festgestellt worden, dass die Verwendung von Bikomponentenfasern die Kombination der Eigenschaften von Monokomponentenfasern erlaubt, sodass eine Faser mit verbesserten mechanischen Festigkeitswerten erhalten werden kann, etwa im Hinblick auf die Reißfestigkeit oder Stabilität der Faser.

In der Praxis sind der Nutzung dieser Kombinationseffekte jedoch bislang dahingehend Grenzen gesetzt, als dass sich die Eigenschaften der Komponenten regelmäßig nicht in der beschriebenen, lediglich vorteilhaften Weise kombinieren lassen. Vielmehr ist es in der Praxis oft so, dass die Bikomponentenfasern lediglich einen günstigen Kompromiss aus den Eigenschaften der reinen Komponenten darstellen.

Allgemein sind weiterhin auch die im Stand der Technik bekannten Verbundfolien, die den vorgenannten Aufbau bzw. die vorgenannten Bestandteile aufweisen, mit einer Reihe von Nachteilen behaftet.

So gelingt es den in der Praxis bekannten, mehrlagigen Verbundfolien oft nicht, bei einer hohen Wasserdampfdurchlässigkeit - also bei einem s_{d}-Wert von kleiner als 0,1 m - die für den jeweiligen Einsatzzweck benötigten mechanischen Eigenschaften unter Gewährleistung einer guten Verbindung der einzelnen Lagen untereinander bereitzustellen. Eine sichere sowie haltbare Verbindung der einzelnen Folienlagen ist jedoch essentiell, um eine dauerhafte sowie zuverlässige Funktionsfähigkeit der Verbundfolie, bspw. als Schutz vor in eine Gebäudestruktur eindringender Feuchtigkeit, zu gewährleisten.

Es hat sich in der Praxis nun gezeigt, dass ein klebstofffreies Fügen von Funktions- und Schutz- bzw. Trägerschicht im Allgemeinen nicht in dauerhaften gleichmäßigen Verbindungen resultiert und letztlich zur Delamination und Funktionsbeeinträchtigung oder gar zum Funktionsverlust der Verbundfolie führt. Das daher in der Regel angewandte Fügen mittels Klebstoffen ist allerdings gleichsam nicht unproblematisch, da der Klebstoff zunächst einen zusätzlichen Kostenfaktor darstellt, und weiterhin die Eigenschaften der Verbundfolie, wie bspw. die Wasserdampfdurchlässigkeit, negativ beeinflusst. Darüber hinaus können die Haltbarkeit und Leistungsfähigkeit der Funktionsschicht auch durch in Klebstoffen enthaltene Additive, welche in die Funktionsschicht migrieren, beeinträchtig werden.

Weiterhin kann der außenseitige Schutz durch die bisher bekannten Schutzschichten zumeist nicht für einen längeren Zeitraum, insbesondere für über 10 Jahre, bei Erhaltung einer hohen mechanischen Stabilität der Schutzschichten sichergestellt werden. Hierbei ist insbesondere die langfristige Witterungs-, UV- sowie Chemikalienbeständigkeit der Schutzschichten bzw. der als solche verwendeten Vliese oft noch verbesserungsbedürftig.

Die EP 3 345 757 A1 betrifft eine atmungsaktive beschichtete Unterlage oder Laminate, welche bei der Errichtung von Gebäuden verwendet werden. Die Unterlage umfasst mindestens drei Schichten, nämlich eine Trägerschicht, welche wasser- und dampfdurchlässig ist, eine Aktivschicht, welche wasserundurchlässig, aber dampfdurchlässig ist, und eine Überzugsschicht, welche wasser- und dampfdurchlässig ist. Die Überzugsschicht besteht zumindest teilweise aus a) thermoplastischem Polyurethan, b) Polyether/Polyamid-Blockcopolymeren oder c) Polyetherstern, vorzugsweise aus aromatischem oder nicht-aromatischem thermoplastischen Polyurethan, d.h.TPU. Die Unterlage kann eine Aktivschicht zwischen zwei Trägerschichten aufweisen.

Ferner sind gut mit den weiteren Lagen der Verbundfolie verbindbare Schutzschichten bzw. Vliese häufig kostenaufwändig in ihrer Herstellung, sodass hier entsprechend Bedarf nach prozesssicher sowie zuverlässig reproduzierbar herstellbaren Vliesen und gleichsam Fasern besteht.

Aufgabe der vorliegenden Erfindung ist es demnach nun, die vorgenannten Nachteile des Standes der Technik zu vermeiden oder zumindest im Wesentlichen zu reduzieren.

Die Aufgabe wird erfindungsgemäß bei einem Spinnvlies der vorgenannten Art dadurch gelöst, dass das erste Polymer und/oder das zweite Polymer ein thermoplastisches Polyurethan enthält und/oder hieraus besteht; weitere vorteilhafte Ausgestaltung dieses Erfindungsaspektes sind Gegenstand der diesbezüglichen Unteransprüche.

Des Weiteren wird die Aufgabe gemäß einem zweiten Aspekt der vorliegenden Erfindung durch eine Verbundfolie, aufweisend mindestens eine Trägerschicht aus einem Spinnvlies mit den vorgenannten Merkmalen sowie mindestens eine, insbesondere wasserdichte und wasserdampfdurchlässige, Funktionsschicht gelöst; weitere vorteilhafte Ausgestaltung dieses Erfindungsaspektes sind Gegenstand der diesbezüglichen Unteransprüche.

Schließlich ist wiederum weitere Lösung der erfindungsgemäßen Aufgabe die Verwendung einer Verbundfolie nach der vorliegenden Erfindung im Baubereich.

Es versteht sich von selbst, dass Besonderheiten, Merkmale, Ausgestaltungen und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich in Bezug auf die übrigen Erfindungsaspekte entsprechend gelten, ohne dass es einer ausdrücklichen Erwähnung bedarf.

Zudem gilt, dass alle im Folgenden genannten Werte- bzw. Parameterangaben oder dergleichen grundsätzlich mit genormten bzw. standardisierten oder explizit angegebene Bestimmungsverfahren oder mit dem Fachmann auf diesem Gebiet an sich geläufigen Bestimmungsmethoden ermittelt bzw. bestimmt werden können.

Darüber hinaus versteht es sich von selbst, dass alle gewichts- oder mengenbezogenen Prozentangaben vom Fachmann derart ausgewählt werden, dass in der Summe 100 % resultieren.

Dies vorausgeschickt, wird im Folgenden die vorliegende Erfindung näher beschrieben.

Gegenstand der vorliegenden Erfindung ist somit - gemäß einem **ersten** Aspekt der vorliegenden Erfindung - ein Spinnvlies aufweisend wenigstens eine Bikomponentenfaser aus einer ersten Komponente und einer zweiten Komponente, wobei die erste Komponente ein erstes Polymer und die zweite Komponente ein sich vom ersten Polymer unterscheidendes zweites Polymer als Bestandteil aufweist, wobei das erste Polymer und/oder das zweite Polymer thermoplastisches Polyurethan enthält und/oder hieraus besteht.

Denn, wie die Anmelderin überraschenderweise herausgefunden hat, zeichnen sich erfindungsgemäße Spinnvliese mit wenigstens einer Bikomponentenfaser gegenüber aus dem Stand der Technik bekannten Spinnvliesen und Vliesschichten dadurch aus, dass sie eine besonders hohe Verbindbarkeit und/oder Haftung mit anderen Materialien, bspw. Materialien die eine Funktionsschicht bilden, aufweisen. Auf dieser Grundlage können mehrlagige Verbundfolien erhalten werden, welche einen unmittelbaren sowie insbesondere nicht lösbaren und entsprechend haltbaren Verbund zwischen den einzelnen Lagen aufweisen. In diesem Zusammenhang ist auch die Herstellung klebstofffreier Verbundfolien möglich.

Die erfindungsgemäß verwendeten Bikomponentenfasern erlauben es, die spezifischen Eigenschaften der eingesetzten Faserkomponenten so zu kombinieren, dass letztlich ein gewisser Synergieeffekt erzielt werden kann. Erfindungsgemäß wird insbesondere eine Faser erhalten, die sowohl eine hohe Festigkeit aufweist als auch ein vorteilhaftes Verhalten beim Verbinden der Fasern untereinander im Zuge der Vliesherstellung, da insbesondere eine erste Komponente mit einer hohen Festigkeit mit einer zweiten Komponente, die eine gute Verbindbarkeit aufweist, kombiniert werden. Gegenüber der Verwendung von Monokomponentenfaservliesen erlaubt die Verwendung von Bikomponentenfasern in Spinnvliesen also eine Verbesserung der Eigenschaften des Vlieses sowie konsequenterweise auch der Verbundfolie.

Dies ist vor allem von besonderem Vorteil für Verbundfolien, bei denen mindestens eine Schutzschicht bzw. Trägerschicht, geformt durch das erfindungsgemäße Spinnvlies, mit einer darauf angeordneten Funktionsschicht kombiniert wird. Dementsprechend zeigen Verbundfolien, die mit dem erfindungsgemäßen Spinnvlies versehen sind, eine hohe mechanische Belastbarkeit sowie Widerstandsfähigkeit, welche insbesondere auch gegenüber äußeren Einflüssen durch Feuchtigkeit, UV-Einstrahlung oder Chemikalien ausgeprägt ist.

Das erfindungsgemäße Spinnvlies ist aber nicht nur für den Einsatz in einer Verbundfolie vorteilhaft. Auch das erfindungsgemäße Spinnvlies als solches zeigt gegenüber aus dem Stand der Technik bekannten Vliesschichten eine Vielzahl von Vorteilen. So kann etwa die Elastizität und/oder Flexibilität des erfindungsgemäßen Spinnvlieses gegenüber aus der Praxis bekannten Vliesen erhöht werden, vorzugsweise um bis zu 30%.

Neben der hervorragenden Kompatibilität und insbesondere Verbindbarkeit des erfindungsgemäßen Spinnvlieses mit anderen Materialien, bspw. solchen, die eine Funktionsschicht in Verbundfolien bilden, zeichnet sich das erfindungsgemäße Spinnvlies, vor allem aber die erfindungsgemäß eingesetzte Bikomponentenfaser, darüber hinaus auch durch eine gute Verbindbarkeit der Faser selbst aus. Dies resultiert in einem Spinnvlies, welches eine erhöhte mechanische Festigkeit besitzt.

Durch die Verwendung eines thermoplastischen Polyurethans in der Bikomponentenfaser des erfindungsgemäßen Spinnvlieses zeichnet sich das erfindungsgemäße Spinnvlies gleichsam durch eine hervorragende Dehnbarkeit und Elastizität aus.

Aus diesem balancierten Verhältnis zwischen Festigkeit und Dehnbarkeit des erfindungsgemäßen Spinnvlieses resultiert wiederum eine gegenüber Vliesen aus dem Stand der Technik erhöhte Reißfestigkeit sowie Nagelausreißfestigkeit des erfindungsgemäßen Spinnvlieses. Essentiell hierfür ist die erfindungsgemäße Verwendung einer Bikomponentenfaser, bei welcher eine der Komponenten ein Polymer aufweist, das ein thermoplastisches Polyurethan enthält und/oder hieraus besteht.

Unter einem thermoplastischen Polyurethan sind im Rahmen der vorliegenden Erfindung Polyurethane zu verstehen, die aus einer Polymerisationsreaktion zwischen Diolen bzw. Polyolen und (Poly-)Isocyanaten resultieren. Charakteristischerweise besitzen thermoplastische Polyurethane sowohl thermoplastische als auch elastomere Eigenschaften, d.h. thermoplastische Polyurethane im Rahmen der vorliegenden Erfindung verhalten sich bei Raumtemperatur vergleichbar zu elastomeren Polymeren und lassen sich darüber hinaus unter Wärmezufuhr plastisch verformen.

Ein besonderer Vorteil der Verwendung thermoplastischer Polyurethane liegt insbesondere auch darin, dass diese Verbindungsklasse von Polymeren strukturell vielfältig ausgebildet sein kann und insbesondere eine Reihe unterschiedlicher funktioneller Strukturmerkmale wie Ether-, Ester- oder Carbonat-Gruppen sowie auch aliphatische und/oder aromatische Kettensegmente aufweisen kann. Auf diese Weise lassen sich die Eigenschaften des thermoplastischen Polyurethans variabel steuern sowie über einen weiten Bereich einstellen, beispielsweise im Hinblick auf die Haftungseigenschaften, die Festigkeit, die Schmelzeigenschaften, die Hydrophobie bzw. Hydrophilie sowie nicht zuletzt die allgemeine chemische Beständigkeit des Polymers.

Vor diesem Hintergrund kann auch die Zusammensetzung erfindungsgemäßer Spinnvliese bzw. der zugrundeliegenden Bikomponentenfaser über einen weiten Bereich variiert werden und maßgeschneidert auf die jeweiligen Bedürfnisse bzw. den jeweiligen Anwendungsfall eingestellt werden. Dieser Aspekt stellt einen weiteren besonderen Vorteil des erfindungsgemäßen Spinnvlieses sowie der daraus erhältlichen erfindungsgemäßen Verbundfolie dar.

Weiterhin zeichnen sich thermoplastische Polyurethane durch eine inhärente flammhemmende Wirkung sowie eine hohe Beständigkeit gegenüber externen Einflüssen, wie beispielsweise Chemikalien-, Feuchtigkeit- oder UV-Einwirkungen, aus. Diese spezifischen Eigenschaften thermoplastischer Polyurethane übertragen sich gleichsam auf das erfindungsgemäße Spinnvlies bzw. die mittels des erfindungsgemäßen Spinnvlieses hergestellten Verbundfolien, so dass im Ergebnis ein Spinnvlies bzw. eine Verbundfolie resultiert, die gegenüber dem Stand der Technik eine höhere Beständigkeit und Haltbarkeit sowie auch verbesserte Eigenschaften im Hinblick auf Sicherheitsaspekte wie etwa den Brandschutz aufweist.

Ausgehend von der guten Verbindbarkeit thermoplastischer Polyurethane bzw. der entsprechenden Bikomponentenfaser ergibt sich darüber hinaus eine hohe Prozesssicherheit sowie Spinnstabilität für die Fertigung erfindungsgemäßer Spinnvliese. Auf diese Weise können gleichzeitig Produktionskosten reduziert werden, da die Fehlerrate bei der Produktion erfindungsgemäßer Spinnvliese minimiert werden kann. Darüber hinaus wird durch die Verwendung einer Bikomponentenfaser, die neben thermoplastischem Polyurethan auch eine weitere polymere Komponente enthält, die Menge an eingesetztem thermoplastischen Polyurethan gegenüber der Verwendung von thermoplastischen Polyurethan-Monokomponentenfasern gesenkt, so dass auch hier Kosten gegenüber dem Stand der Technik, insbesondere gegenüber der Verwendung von Monokomponentenfasern bzw. Monokomponentenfaservliesen, erreicht werden können.

Dabei ist es im Rahmen der vorliegenden Erfindung vorzugsweise vorgesehen, dass die Bikomponentenfaser zumindest im Wesentlichen eine Kern-Mantel-Struktur aufweist, insbesondere eine Kern-Mantel-Struktur aufweist.

Im Rahmen der vorliegenden Erfindung werden unter Bikomponentenfasern, die eine Kern-Mantel-Struktur aufweisen, solche Fasern verstanden, bei denen die zweite Komponente die erste Komponente im Querschnitt der Faser umgibt und somit einschließt. Die Verwendung derart strukturierter Bikomponentenfasern birgt insbesondere den Vorteil, dass ein optimales sowie sicher reproduzierbares Verhältnis von Kernkomponente zu Mantelkomponente während der Fertigung der Faser eingestellt werden kann, so dass insbesondere je nach gewünschter Zusammensetzung und gewünschten Eigenschaften der Bikomponentenfaser eine individuell bzw. spezifisch zusammengesetzte Faser erhalten werden kann. Gleichsam sind auf diese Weise die Eigenschaften der Bikomponentenfaser steuerbar und insbesondere auf einen bestimmten Anwendungsfall abstimmbar.

Hierbei ist es im Rahmen der vorliegenden Erfindung vorzugsweise vorgesehen, dass die Bikomponentenfaser einen Kern gebildet aus der ersten Komponente und einen Mantel gebildet aus der zweiten Komponente aufweist.

In diesem Sinne wird es im Rahmen der vorliegenden Erfindung also bevorzugt, wenn der Kern der Bikomponentenfaser aus dem ersten Polymer und der Mantel der Bikomponentenfaser aus dem zweiten Polymer gebildet wird.

Hierbei ist es gemäß einer weiter bevorzugten Ausführungsform der vorliegenden Erfindung bevorzugt, wenn das erste Polymer einen thermoplastischen Kunststoff, insbesondere ausgewählt aus der Gruppe der Polyolefine, der Polyester und/oder deren Mischungen, aufweist. Vorzugsweise besteht das erste Polymer aus einem der vorgenannten thermoplastischen Kunststoffe.

Weiterhin ist es bevorzugt, wenn das Polyolefin ausgewählt ist aus der Gruppe der Polyolefin-Homopolymere, insbesondere aus Polyethylen, Polypropylen, Polybutylen, Polyhexylen, vorzugsweise Polyethylen, Polypropylen. Gleichsam kann es bevorzugt sein, dass das Polyolefin ausgewählt ist aus der Gruppe der Polyolefin-Copolymere, insbesondere aus Ethylen-Copolymeren, Propylen-Copolymeren, Butylen-Copolymeren, Hexylen-Copolymeren, vorzugsweise Ethylen-Copolymeren, Propylen-Copolymeren, und deren Mischungen.

Auch kann es vorgesehen sein, dass der Polyester ausgewählt ist aus Polymeren der Terephtalsäure, insbesondere Copolymeren der Terephthalsäure. Vorzugsweise ist der Polyester PET.

Dabei wird im Rahmen der vorliegenden Erfindung unter einem Copolymer ein Polymer verstanden, das aus mindestens zwei verschiedenen Monomeren hergestellt ist, wobei der Massenanteil des Monomers, welches für die Benennung des Copolymers maßgeblich ist, mindestens 50 Gew.-% beträgt.

Durch die erfindungsgemäße Verwendung eines thermoplastischen Kunststoffs, insbesondere ausgewählt aus der Gruppe der Polyolefine, der Polyester und/oder deren Mischungen, im ersten Polymer ergibt sich eine Bikomponentenfaser, die im Hinblick auf die erste, vorzugsweise den Kern bildende, Komponente einen Kunststoff aufweist, der sich durch seine Beständigkeit, Abriebfestigkeit, Schlagzähigkeit, sowie nicht zuletzt seine sichere und kostengünstige Verfügbarkeit auszeichnet. Auf diese Weise kann insgesamt eine Bikomponentenfaser erzeugt werden, die gegenüber dem Stand der Technik einen verringerten Kostenaufwand im Hinblick auf ihre Produktion verursacht und gleichzeitig die für ein Spinnvlies, geeignet zur Verwendung in Verbundfolien für den Baubereich, notwendigen bzw. gewünschten Eigenschaften aufweist.

Im Hinblick auf das zweite Polymer ist es im Rahmen der vorliegenden Erfindung vorzugsweise vorgesehen, wenn das zweite Polymer ausgewählt ist aus der Gruppe der aliphatischen und/oder aromatischen Polyurethane, insbesondere des Ether-Typs, des Polyester-Typs, des Carbonat-Typs, und deren Mischungen. Vorzugsweise ist das zweite Polymer ausgewählt aus aliphatischen und/oder aromatischen Polyurethanen des Ether-Typs, des Carbonat-Typs und deren Mischungen, bevorzugt aliphatischen und/oder aromatischen Polyurethanen des Ether-Typs, besonders bevorzugt aromatischen Polyurethanen des Ether-Typs.

Im Rahmen der vorliegenden Erfindung werden unter Polyurethanen des Ether-Typs solche thermoplastischen Polyurethane verstanden, die aus einem Isocyanat und einem oder mehreren Polyolen durch Polyaddition aufgebaut werden. Bei den Isocyanaten kann es sich um aliphatische Diisocyanate, wie H12 MDI (1-Isocyanato-4-[(4-isocyanatocyclohexyl) methyl]cyclohexan), HDI (1,6-Hexamethylendiisocyanat) und IPDI (3-Isocyanatmethyl-3,5,5-trimethylcyclohexylisocyanat) oder um aromatische Diisocyanate, wie TDI (Toluol-2,4-diisocyanat), NDI (Naphthylen-1,5-diisocyanat) oder MDI (Methylendi(phenylisocyanat)), handeln.

Auf der Seite der Polyole handelt es sich vorzugsweise um aromatische oder aliphatische Polyole, wobei als Kettenverlängerer insbesondere kurzkettige Diole eingesetzt werden.

Weiterhin wird im Rahmen der vorliegenden Erfindung unter einem Polyurethan vom Ester-Typ ein thermoplastisches Polyurethan verstanden, das wiederum aus einem Isocyanat sowie einem oder mehreren Polyolen durch Polyaddition aufgebaut wird, wobei mindestens eines der Polyole das Strukturelement eines Carbonsäureesters enthält.

Nicht zuletzt ist unter einem Polyurethan des Carbonat-Typs ein thermoplastisches Polyurethan zu verstehen, das durch Polyaddition von einem Isocyanat mit einem oder mehreren Polyolen hergestellt werden kann, wobei mindestens eines der Polyole das Strukturelement eines Kohlensäurediesters enthält.

Diesen Definitionen entsprechend werden für Polyurethane des Ester-Typs bzw. des Carbonat-Typs auf Seiten der Polyole im Rahmen der vorliegenden Erfindung aromatische und/oder aliphatische Polyole eingesetzt, die einerseits Carbonsäureester-Polyole sind bzw. durch Umesterung von Kohlensäure-Diphenylester mit Diolen, wie zum Beispiel 1,6-Hexandiol, in Polycarbonat-Polyole überführt werden. Weiterhin können Polycarbonat-Polyole zur Erzeugung von Polyurethan des Carbonat-Typs durch die Reaktion von Kohlendioxid mit Epoxiden zugänglich gemacht werden.

In Bezug auf die Isocyanatkomponente kann es sich, wie im Fall der Polyurethane des Ether-Typs, um aliphatische Diisocyanate, wie H12 MDI (1-Isocyanato-4-[(4-isocyanatocyclohexyl) methyl]cyclohexan), HDI (1,6-Hexamethylendiisocyanat) und IPDI (3-Isocyanatmethyl-3,5,5-trimethylcyclohexylisocyanat) oder um aromatische Diisocyanate, wie TDI (Toluol-2,4-diisocyanat), NDI (Naphthylen-1 ,5-diisocyanat) oder MDI (Methylendi(phenylisocyanat)), handeln.

Wie bereits eingangs erwähnt, zeichnen sich thermoplastische Polyurethane, insbesondere des Ether- bzw. Carbonat-Typs, durch eine sehr hohe Beständigkeit gegenüber Hydrolyse oder Zersetzung durch Wasser, Chemikalien, UV-Einwirkung oder hohe Temperaturen und extreme Bewetterung aus. Gleichzeitig besitzen thermoplastische Polyurethane der vorgenannten Typen eine hohe Abriebfestigkeit sowie sehr gute Verbindbarkeit untereinander sowie auch mit weiteren Materialien, insbesondere weiteren Kunststoffen und/oder Kunstharzen, welche üblicherweise auch in den Funktionsschichten von Verbundfolien eingesetzt werden. Ebenso zeichnen sich thermoplastische Polyurethane des Ester-Typs durch eine hohe UV-Beständigkeit sowie allgemeine Wetterbeständigkeit bei erhöhten Temperaturen aus, sind jedoch im Vergleich zu thermoplastischen Polyurethanen des Carbonat-Typs geringfügig anfälliger gegenüber Hydrolyse.

Durch die Verwendung thermoplastischer Polyurethane in der zweiten, vorzugsweise als Mantel ausgebildeten, Komponente der Bikomponentenfaser wird insgesamt ein Spinnvlies erhalten, das eine exzellente Verbindbarkeit der Fasern untereinander besitzt. Gleichzeitig weist auch das resultierende Bikomponentenfaservlies eine hervorragende Verbindbarkeit mit weiteren Materialien, wie beispielsweise Kunststoff- bzw. Kunstharz-basierten Funktionsschichten, für den Aufbau von Mehrschichtverbundfolien für den Baubereich, auf. Ein besonderer Vorteil in der Verwendung von thermoplastischen Polyurethanen liegt, wie eingangs erwähnt, in der strukturell vielfältig gestaltbaren Zusammensetzung bzw. dem strukturell vielfältig gestaltbaren Aufbau von thermoplastischen Polyurethanen, welcher sowohl im Hinblick auf die Diisocyanat-Komponente als auch die Polyol-Komponente in vielen Aspekten variabel sowie gezielt auf einen bestimmten Anwendungsfall einstellbar ist.

Darüber hinaus ermöglicht die Verwendung von thermoplastischem Polyurethan im Mantel der Bikomponentenfaser die klebstofffreie Verbindung mit beosnders leistungsstarken Funktionsschichten auf Polyurethanbasis, welche bislang hauptsächlich verklebt werden, was regelmäßig zu Performanceeinbußen des Materials führt.

Zur weiteren Verbesserung der Eigenschaften der Bikomponentenfaser können den einzelnen Komponenten bzw. Polymeren, d.h. der ersten Komponente und/oder der zweiten Komponente bzw. dem ersten Polymer und/oder dem zweiten Polymer, Additive zugesetzt werden.

Diese Additive können aus den verschiedensten Stoffen ausgewählt sein und beispielsweise zur Färbung, zur Thermostabilisation, zur Flammhemmung, zur Hydrophilierung oder Hydrophobierung oder zur UV-Stabilisation des Polymers bzw. der Bikomponentenfaser insgesamt dienen. Dabei ist es generell vorgesehen, dass die Additive regelmäßig bzw. gleichmäßig in der polymeren Phase verteilt sind. In diesem Sinne können Additive auch als Zusatzstoffe verstanden werden, die dem Polymer in der jeweiligen Komponente zugefügt werden, um die Eigenschaften der resultierenden Faser bzw. des aus der resultierenden Faser gewonnenen Spinnvlieses zu modifizieren bzw. zu verbessern.

In diesem Sinne hat es sich als vorteilhaft erwiesen, wenn es sich bei dem Additiv um ein primäres oder sekundäres Antioxidanz, einen UV-Absorber, einen UV-Stabilisator, einen Flammhemmer, ein Antistatikum, ein Gleitmittel, einen Metalldesaktivator, ein Hydrophilierungsmittel, ein Hydrophobierungsmittel, ein Antifogging-Additiv und/oder ein Biozid handelt. Besonders bevorzugt sind dabei folgende Stoffklassen und Mischungen daraus:
- Sterisch gehinderte Phenole, aromatische sekundäre oder tertiäre Amine, Aminophenole, aromatische Nitro- oder Nitrosoverbindungen als primäre Antioxidantien.
- Organische Phosphite oder Phosphonate, Thioether, Thioalkohole, Thioester, Sulfide und schwefelhaltige organische Säuren, Dithiocarbamate, Thiodipropionate, Aminopyrazole, metallhaltige Chelate, Mercaptobenzimidazole als sekundäre Antioxidantien.
- Hydroxybenzophenone, Cinnamate, Oxalanilide, Salicylate, 1,3 Benzoldiol-Monobenzoate, Benzotriazole, Triazine, Benzophenone sowie UVabsorbierende Pigmente wie Titandioxid oder Ruß als UV-Absorber.
- Metallhaltige Komplexe organischer Schwefel- oder Phosphorverbindungen, sterisch gehinderte Amine (HALS) als UV-Stabilisatoren.
- Metallhydroxide, Borate, organische brom- oder chlorhaltige Verbindungen, organische Phosphorverbindungen, Antimontrixoxid, Melamin, Melamincyanurat, Blähgraphit oder andere Intumeszenz-Systeme als Flammhemmer.
- Quartäre Ammoniumsalze, Alkylsulfonate, Alkylsufate, Alkylphosphate, Dithiocarbamate, (Erd-)Alkalimetallcarboxylate, Polyethylenglykole sowie deren Ester und Ether, Fettsäureester, Ethoxylate, Mono- und Diglyceride, Ethanolamine als Antistatika.
- Fettalkohole, Ester von Fettalkoholen, Fettsäuren, Fettsäureester, Dicarbonsäureester, Fettsäureamide, Metallsalze von Fettsäuren, Polyolefinwachse, natürliche oder künstliche Paraffine und deren Derivate, Fluorpolymere und Fluoroligomere, Antiblockmittel wie Kieselsäuren, Silikone, Silikate, Calciumcarbonat etc. als Gleitmittel.
- Amide von Mono- und Dicarbonsäuren und deren Derivate, zyklische Amide, Hydrazone und Bishydrazone, Hydrazide, Hydrazine, Melamin und dessen Derivate, Benzotriazole, Aminotriazole, sterisch gehinderte Phenole in Verbindung mit komplexierenden Metallverbindungen, Benzylphosphonate, Pyridithiole, Thiobisphenolester als Metalldesaktivatoren.
- Polyglycole, Ethoxylate, Fluorpolymere und Fluoroligomere, Montanwachse, insbesondere Stearate, als Hydrophilierungs-, Hydrophobierungs- oder Anti-Fogging-mittel.
- 10,10'-Oxybisphenoxarsin (OBPA), N-(Trihalogen-methylthiol)phthalimid, Tributylzinnoxid, Zinkdimethyldithiocarbamat, Diphenylantimon-2-ethylhexanoat, Kupfer-8-hydroxychinolin, Isothiazolone, Silber und Silbersalze als Biozide.

Im Hinblick auf den Aufbau der Bikomponentenfaser zur Herstellung des erfindungsgemäßen Spinnvlieses hat es sich im Rahmen der vorliegenden Erfindung weiterhin vorzugsweise bewährt, wenn der Massenanteil der ersten Komponente, insbesondere des ersten Polymers, mindestens 50 Gew.-%, insbesondere mindestens 60 Gew.-%, vorzugsweise mindestens 70 Gew.-%, bevorzugt mindestens 80 Gew.-%, bezogen auf die Gesamtmasse der Bikomponentenfaser, beträgt.

Gleichsam kann es im Rahmen einer bevorzugten Ausführungsform der vorliegenden Erfindung vorgesehen sein, dass der Massenanteil der ersten Komponente, insbesondere des ersten Polymers, 50 bis 98 Gew.-%, insbesondere 60 bis 95 Gew.-%, vorzugsweise 70 bis 95 Gew.-%, bevorzugt 80 bis 90 Gew.-%, bezogen auf die Gesamtmasse der Bikomponentenfaser, beträgt.

Demgegenüber kann es außerdem vorgesehen sein, dass der Massenanteil der zweiten Komponente, insbesondere des zweiten Polymers, höchstens 50 Gew.-%, insbesondere höchstens 40 Gew.-%, vorzugsweise höchstens 30 Gew.-%, bevorzugt höchstens 20 Gew.-%, bezogen auf die Gesamtmasse der Bikomponentenfaser, beträgt.

In diesem Zusammenhang hat es sich im Rahmen einer weiter bevorzugten Ausführungsform der vorliegenden Erfindung bewährt, wenn der Massenanteil der zweiten Komponente, insbesondere des zweiten Polymers, 2 bis 50 Gew.-%, insbesondere 5 bis 40 Gew.-%, vorzugsweise 5 bis 30 Gew.-%, bevorzugt 10 bis 20 Gew.-%, bezogen auf die Gesamtmasse der Bikomponentenfaser, beträgt.

Auf Basis dieses Aufbaus bzw. dieser Zusammensetzung kann die Herstellung der erfindungsgemäß verwendeten Bikomponentenfaser zuverlässig, prozesssicher sowie kosteneffizient durchgeführt werden. Gleichzeitig kann die Zusammensetzung der Bikomponentenfaser spezifisch für den jeweiligen Anwendungsfall des entsprechend aus der Faser erhaltenen Spinnvlieses aufgesetzt und abgestimmt werden. Insbesondere kann die Verbindbarkeit der Bikomponentenfaser durch die spezifische Zusammensetzung des thermoplastischen Polyurethans gesteuert werden. Auch kann durch die Auswahl eines speziellen thermoplastischen Polyurethans spezifisch die Dehnbarkeit, Elastizität sowie Festigkeit des hergestellten Spinnvlieses beeinflusst werden. Diese besondere Variabilität in der Einzelzusammensetzung der Komponenten der Bikomponentenfaser ist so im Stand der Technik nicht bekannt und dementsprechend ein besonderer Vorteil der vorliegenden Erfindung, insbesondere des erfindungsgemäßen Spinnvlieses aufweisend mindestens eine Bikomponentenfaser, wie sie zuvor dargestellt wurde.

Erfindungsgemäße Spinnvliese zeichnen sich vorzugsweise weiterhin dadurch aus, dass das Spinnvlies ein Flächengewicht im Bereich von 50 bis 300 g/m², insbesondere von 80 bis 150 g/m², bevorzugt von 100 und 120 g/m², aufweist.

Außerdem hat es sich im Rahmen der vorliegenden Erfindung als vorteilhaft erwiesen, wenn die spezifische Reißkraft des Spinnvlieses mindestens 1,8 N/g · 5 cm in Maschinenrichtung und/oder mindestens 1,3 N/g · 5 cm in Querrichtung, vorzugsweise 2,0 N/g · 5 cm in Maschinenrichtung und/oder mindestens 1, 5 N/g · 5 cm in Querrichtung, bevorzugt mindestens 2,2 N/g · 5 cm in Maschinenrichtung und/oder mindestens 2,0 N/g · 5 cm in Querrichtung, besonders bevorzugt mindestens 2,4 N/g · 5 cm in Maschinenrichtung und/oder mindestens 1,9 N/g · 5 cm in Querrichtung. Die spezifische Reißkraft wird dabei gemessen nach EN 12311-1.

Dabei bezeichnet die Maschinenrichtung die Richtung, in der das Vlies bei seiner Herstellung in der bzw. durch die Maschine transportiert worden ist, also regelmäßig die Längenrichtung einer Vliesbahn. Die Querrichtung, in der sich das Vlies flächig ausdehnt, bezeichnet die Richtung, die rechtwinklig zu der Maschinenrichtung liegt, also regelmäßig die in der Breite einer Vliesbahn liegende Richtung.

Es hat sich gezeigt, dass diese vorteilhaften Mindestwerte für die spezifische Reißkraft des Spinnvlieses jedenfalls angestrebt werden sollten, wenn erfindungsgemäße Bikomponentenfasern für die Herstellung des Spinnvlieses verwendet werden. Die erfindungsgemäßen Bikomponentenfasern erlauben es, diese vorteilhaften Mindestwerte für die spezifische Reißkraft zu erzielen, ohne dass dabei die spezifische Nagelausreißkraft unverhältnismäßig absinkt.

Vorteilhafterweise beträgt die spezifische Nagelausreißkraft des Spinnvlieses mindestens 1,0 N/g in Maschinenrichtung und/oder mindestens 1,2 N/g in Querrichtung, vorzugsweise mindestens 1,4 N/g in Maschinenrichtung und/ oder mindestens 1,5 N/g in Querrichtung, bevorzugt mindestens 1,6 N/g in Maschinenrichtung und/oder mindestens 1,8 N/g in Querrichtung, besonders bevorzugt mindestens 1,8 N/g in Maschinenrichtung und/oder mindestens 2,1 N/g Querrichtung.

Die spezifische Nagelausreißkraft ist dabei die maximale Kraft, die beim Zerreißen eines Vliesstreifens auftritt, wenn der Vliesstreifen bereits eine gegebene Beschädigung, nämlich einen durch den Vliesstoff gestoßenen Nagel, aufweist. Gemessen wird die spezifische Nagelausreißkraft nach EN 12310-1. Es hat sich gezeigt, dass die genannten Mindestwerte für die spezifische Nagelausreißkraft des Spinnvlieses angestrebt werden können, ohne dass die spezifische Reißkraft des Spinnvlieses unverhältnismäßig absinkt, wenn erfindungsgemäße Bikomponentenfasern entsprechend hinsichtlich ihrer Verbindbarkeit und Festigkeit optimiert werden. Insbesondere ist es dabei auch möglich, eine Kombination der genannten spezifischen vorteilhaften Nagelausreißkräfte und der zuvor genannten, vorteilhaften spezifischen Mindestreißkräfte zu realisieren.

Die Kombination dieser beiden vorteilhaften Mindestparameter führt zu einem Spinnvlies, welches im Hinblick auf seine mechanischen Eigenschaften für eine Vielzahl von Anwendungen geeignet ist. Ein derartiges Spinnvlies kann beispielsweise gut im Baubereich eingesetzt werden, wo häufig eine Befestigung der Spinnvliesbahnen durch Nageln, Tackern oder Schrauben möglich sein muss. Das Spinnvlies darf dabei nicht ab- oder ausreißen, wenn es beispielsweise auf einem Dach befestigt wird. Auch ist eine Verwendung dieser vorteilhaften Spinnvliese als Geotextilien gut möglich. Geotextilien müssen jedenfalls eine hohe Toleranz für punktuelle Beschädigungen, wie sie beispielsweise durch spitze Steine verursacht werden können, aufweisen.

In der Praxis geht eine hohe spezifische Nagelausreißfestigkeit oft mit einer guten Haptik einher. Die Weichheit und der textile Griff derartiger Spinnvliese und der Verbundfolien eröffnen daher auch Anwendungen, z.B. Anwendungen im Hygiene- oder Medizinbereich. Ursächlich für die gute Haptik ist die hohe Beweglichkeit einzelner Fasern, die regelmäßig mit dem Auftreten hoher Nagelausreißkräfte einhergeht. Fasern, die sich derart verhalten, weisen in der Praxis regelmäßig auch als weich und angenehm empfundene haptische Eigenschaften auf. Die Fasersegmentbeweglichkeit ermöglicht es, dass sich Fasern bei der Bewegung des Nagels durch das Vlies in dem Nagel "sammeln", indem sie den Nagel, der sich durch das Vlies bewegt, ausweichen und nicht sofort zerreißen. Dies führt zu einer Zone erhöhter Faserdichte, also eine Zone erhöhter Festigkeit, um den Nagel.

Es zeigen die Figurendarstellungen gemäß:
Fig. 1: eine Verbundfolie mit einer äußeren Trägerschicht und einer inneren Trägerschicht 4.
Fig. 2: eine Verbundfolie mit einer äußeren Trägerschicht und einer inneren Trägerschicht sowie einer Funktionsschicht, die wenigstens zwei Lagen von Membranschichten - das heißt zwei Membranschichtlagen - aufweist.
Fig. 3: eine Querschnittsansicht einer Ausführungsform einer erfindungsgemäßen Bikomponentenfaser als Kern-Mantel-Faser.
Fig. 4: eine Querschnittsansicht einer weiteren Ausführungsform einer erfindungsgemäßen Bikomponentenfaser als Kern-Mantel-Faser.
Fig. 5: eine Querschnittsansicht einer weiteren Ausführungsform einer erfindungsgemäßen Bikomponentenfaser als Kern-Mantel-Faser mit exzentrisch angeordnetem Kern.
Fig. 6: eine Vielzahl beispielhafter Bikomponentenfasern, die ein erfindungsgemäßes Spinnvlies bilden.

Weiterer Gegenstand der vorliegenden Erfindung - gemäß einem **zweiten** Aspekt der vorliegenden Erfindung - ist eine Verbundfolie, aufweisend mindestens eine Trägerschicht aus einem erfindungsgemäßen Spinnvlies sowie mindestens eine, insbesondere wasserdichte und wasserdampfdurchlässige, Funktionsschicht.

Weiterhin wird es bevorzugt, wenn die mindestens eine Funktionsschicht auf der mindestens einen Trägerschicht angeordnet, vorzugsweise zwischen zwei Trägerschichten angeordnet, ist.

Hierzu hat es sich als vorteilhaft erwiesen, wenn die Funktionsschicht als monolithische Membranschicht und/oder als mikroporöse Membranschicht, insbesondere als monolithische Membranschicht, ausgebildet ist.

In diesem Sinne ist es im Rahmen einer bevorzugten Ausführungsform der vorliegenden Erfindung vorgesehen, dass die Funktionsschicht ein thermoplastisches Polyurethan enthält, insbesondere hieraus besteht.

Thermoplastisches Polyurethan zeichnet sich dabei insbesondere durch seine intrinsisch flammenhemmende Wirkung sowie ein gutes Langezeitalterungsverhalten auf, vorzugsweise für Standzeiten von mehr als 10 Jahren.

Insbesondere zeigen thermoplastische Polyurethane eine deutlich verbesserte dauerhafte Betriebssicherheit im Rahmen der Verwendung als Funktionsschicht einer Mehrschichtfolie für den Baubereich. Hierzu zählen:
- deutlich höhere Hydrolysebeständigkeit,
- deutlich höhere Chemikalienbeständigkeit,
- deutlich bessere Alterungsbeständigkeit bei hohen Temperaturen,
- verbesserte Bewitterungsbeständigkeit und
- höhere Abriebfestigkeit.

Des Weiteren ist festgestellt worden, dass thermoplastische Polyurethane ein verbessertes inhärentes flammhemmendes Verhalten mit sich bringen.

Aus diesen Eigenschaften lässt sich ableiten, dass bei Verwendung von thermoplastischen Polyurethanen das Flächengewicht des monolithischen Funktionsfilms gesenkt werden kann, ohne
- die Betriebssicherheit gegenüber bisherigen Folien, welche im Baubereich eingesetzt werden, zu reduzieren,
- behördliche Anforderungen hinsichtlich der zu erfüllenden Brandschutznormung zu missachten.

Damit ergibt sich insbesondere eine ressourcen- und kostensparende Ausführung einer Mehrschichtfolie.

Weiter gelten auch die vorteilhaften Aspekte und Eigenschaften von thermoplastischem Polyurethan, wie sie für die Bikomponentenfaser des erfindungsgemäßen Spinnvlieses aufgezählt wurden, uneingeschränkt für in der Funktionsschicht enthaltenes thermoplastisches Polyurethan.

Im Rahmen einer weiteren bevorzugten Ausführungsform der vorliegenden Erfindung hat es sich als vorteilhaft ergeben, wenn das thermoplastische Polyurethan der Funktionsschicht ausgewählt ist aus der Gruppe der aliphatischen und/oder aromatischen Polyurethane, insbesondere des Ether-Typs, des Polyester-Typs, des Carbonat-Typs, und deren Mischungen. Noch weiter bevorzugt wird es, wenn das thermoplastische Polyurethan der Funktionsschicht ausgewählt ist aus der Gruppe der aliphatischen und/oder aromatischen Polyurethane des Carbonat-Typs, vorzugsweise der aromatischen Polyurethane des Carbonat-Typs.

Außerdem wird es bevorzugt, wenn die Funktionsschicht ein Flächengewicht im Bereich von 5 bis 150 g/m², insbesondere von 20 bis 100 g/m², vorzugsweise 30 bis 80 g/m², aufweist. Auf diese Weise kann insgesamt eine Verbundfolie bereitgestellt werden, die ein gegenüber aus dem Stand der Technik bekannten Verbundfolien optimiertes Gesamtflächengewicht aufweist.

Bei einer regensicheren und/oder wasserdichten Ausbildung der Verbundfolie ist es weiterhin vorgesehen, dass diese einer Wassersäule von größer als 800 mm, bevorzugt in einem Bereich von 1.000 bis 20.000 mm, weiter bevorzugt von 1.500 mm bis 9.000 mm, Stand hält. Die Wassersäule ist eine Maßeinheit, die die Wasserdichtigkeit von technischen Geweben angibt und nach DIN EN 20811:1992, auch ISO 811 genannt, bestimmt werden kann (Stand September 2018).

Darüber hinaus hat es sich als vorteilhaft erwiesen, wenn die erfindungsgemäße Verbundfolie einen s_{d}-Wert von weniger als 0,5 m, insbesondere weniger als 0,2 m, vorzugsweise weniger als 0,1 m, aufweist.

In diesem Zusammenhang gibt der s_{d}-Wert die wasserdampfdiffusionsäquivalente Luftschichtdicke an und ist ein bauphysikalisches Maß für den Wasserdampfdiffusionswiderstand eines Bauteils oder einer Bauteilschicht. Über den s_{d}-Wert kann die Dampfdurchlässigkeit eines Baustoffs beurteilt werden. Der Wasserdampfdiffusionswiderstand wird anschaulich durch die Dicke einer Luftschicht beschrieben, die notwendig ist, so dass die Luftschicht im stationären Zustand unter denselben Bedingungen von demselben Diffusionsstrom - wie das betrachtete Bauteil - durchströmt wird. Die Verbundfolie ist insbesondere diffusionsoffen ausgebildet, wobei die Diffusionsoffenheit durch einen s_{d}-Wert von kleiner oder gleich 0,5 m charakterisiert ist.

Vorzugsweise ist die Weiterreißfestigkeit der Verbundfolie größer als 50 N/mm. Bevorzugt liegt die Weiterreißfestigkeit zwischen 50 N/mm und 500 N/mm, weiter bevorzugt zwischen 100 N/mm bis 300 N/mm.

Die Weiterreißfestigkeit ist eine physikalische Größe, die eine Materialeigenschaft sowie den Einsatzbereich der Verbundfolie kennzeichnet. Die Weiterreißfestigkeit kann auch als Kerbfestigkeit bezeichnet werden. Die Weiterreißfestigkeit gibt den Widerstand eines Materials - im vorliegenden Falle der Verbundfolie - an, nach dem Einschneiden oder Einkerben nicht weiter zu reißen. Je höher der ermittelte Wert der Weiterreißfestigkeit ist, desto widerstandfähiger ist der geprüfte Stoff gegen das Weiterreißen. Demgegenüber ist es bei einem niedrigeren Wert so, dass die Weiterreißfestigkeit des Materials umso geringer ist. Die Weiterreißfestigkeit schließt sich folglich messtechnisch an die Messung der Reißfestigkeit an.

Sowohl die Reißfestigkeit als auch die Weiterreißfestigkeit kann richtungsabhängig ausgebildet sein, insbesondere in Abhängigkeit der Faserrichtung (Maschinenrichtung und Querrichtung). Die vorgenannten Reißfestigkeiten gelten insbesondere für die Maschinenrichtung und/oder Querrichtung.

Dabei bezeichnet die Maschinenrichtung die Richtung, in der das Vlies bei seiner Herstellung in der bzw. durch die Maschine transportiert worden ist, also regelmäßig die Längenrichtung einer Vliesbahn. Die Querrichtung, in der sich das Vlies flächig ausdehnt, bezeichnet die Richtung, die rechtwinklig zu der Maschinenrichtung liegt, also regelmäßig die in der Breite einer Vliesbahn liegende Richtung.

Im Rahmen einer weiter bevorzugten Ausführungsform der vorliegenden Erfindung kann es vorgesehen sein, dass die Funktionsschicht als mehrlagige Folie ausgebildet ist, insbesondere eine erste und eine zweite Lage aufweist, vorzugsweise eine erste und eine zweite Lage in Form monolithischer Schichten aufweist.

Darüber hinaus hat es sich als vorteilhaft erwiesen, wenn die Verbindung zwischen Funktionsschicht und Trägerschicht zumindest im Wesentlichen, insbesondere vollständig, klebstofffrei ist und/oder die Funktionsschicht unmittelbar auf die Trägerschicht aufextrudiert ist. Hierbei wird es besonders bevorzugt, wenn die Trägerschicht durch Extrusion mit der Funktionsschicht beschichtet und fest verbunden ist, bevorzugt die Funktionsschicht durch Coextrusion, insbesondere durch Mehrschichtcoextrusion, unmittelbar auf die Trägerschicht aufgebracht ist.

Das heißt, dass es im Rahmen der vorliegenden Erfindung in besonders vorteilhafter Weise möglich ist, eine Verbundfolie bereitzustellen, welche weitestgehend, insbesondere vollständig, klebstofffrei ausgebildet ist. Dies wird vor allem durch die besondere Verbindbarkeit des erfindungsgemäßen Spinnvlieses mit der erfindungsgemäß verwendeten Funktionsschicht erreicht, welche durch den erfindungsgemäßen Herstellungsprozess bereits während des Auftrags aufeinander, insbesondere im Zuge der Aufextrusion bzw. Coextrusion der Schichten, fest und unmittelbar miteinander verbunden werden. Dadurch resultiert vor allem auch ein besonders haltbarer sowie belastbarer Verbund zwischen der Funktionsschicht und der Trägerschicht, welche das erfindungsgemäße Spinnvlies mit der wenigstens einen Bikomponentenfaser aufweist. Im Detail kann angenommen werden, dass durch den extrusionsbasierten Herstellungsprozess der Verbundfolie ein stoffschlüssiger Verbund zwischen Träger- und Funktionsschicht erreicht wird. Dieser Aspekt begründet gleichsam auch die hervorragende Haltbarkeit sowie Beständigkeit der erfindungsgemäßen Verbundfolie gegenüber äußeren Einflüssen durch Feuchtigkeits-, UV- sowie Chemikalieneinwirkung.

Im Rahmen einer alternativen Ausführungsform der vorliegenden Erfindung kann es auch vorgesehen sein, dass die erfindungsgemäße Verbundfolie durch einen Kalandrierprozess, insbesondere durch Thermokalandrieren, hergestellt wird. Insbesondere werden demgemäß die einzelnen Schichten der Verbundfolie durch beheizte Walzen, insbesondere durch einen Walzenspalt, gefördert und/oder gezogen, insbesondere so dass die einzelnen Schichten der Verbundfolie hierbei durch die Einwirkung von Wärme und Druck miteinander verbunden werden.

Ebenso wie im Zuge der extrusionsbasierten Herstellung der erfindungsgemäßen Verbundfolie wird vorzugsweise auch im Rahmen dieses Herstellungsverfahrens ein fester und unmittelbarer, insbesondere stoffschlüssiger, Verbund der Funktionsschicht mit der mindestens einen Trägerschicht erreicht.

Für weitergehende Einzelheiten zu der erfindungsgemäßen Verbundfolie kann auf die obigen Ausführungen zu den übrigen Erfindungsaspekten verwiesen werden, welche in Bezug auf die erfindungsgemäße Verbundfolie entsprechend gelten.

Schließlich weiterer Gegenstand der vorliegenden Erfindung - gemäß einem **drit- ten** Aspekt der vorliegenden Erfindung - ist die Verwendung einer erfindungsgemäßen Verbundfolie im Baubereich, insbesondere als Dach oder Fassadenbahn, insbesondere als Dachunterspannbahn, Unterdeckbahn oder Fassadenbahn.

Für weitergehende Einzelheiten zu der erfindungsgemäßen Verwendung einer erfindungsgemäßen Verbundfolie kann auf die obigen Ausführungen zu den übrigen Erfindungsaspekten verwiesen werden, welche in Bezug auf die erfindungsgemäße Verwendung entsprechend gelten.

Der Gegenstand der vorliegenden Erfindung wird nachfolgend in nicht beschränkender Weise anhand der Ausführungsbeispiele verdeutlicht.

Weitere Merkmale, Vorteile und Anwendungsmöglichkeiten der vorliegenden Erfindung ergeben sich aus der nachfolgenden Beschreibung von Ausführungsbeispielen anhand der Zeichnungen und der Zeichnungen selbst. Dabei bilden alle beschriebenen und/oder bildlich dargestellten Merkmale für sich oder in beliebiger Kombination den Gegenstand der vorliegenden Erfindung, unabhängig von Ihrer Zusammenfassung in den Ansprüchen oder deren Rückbeziehung.

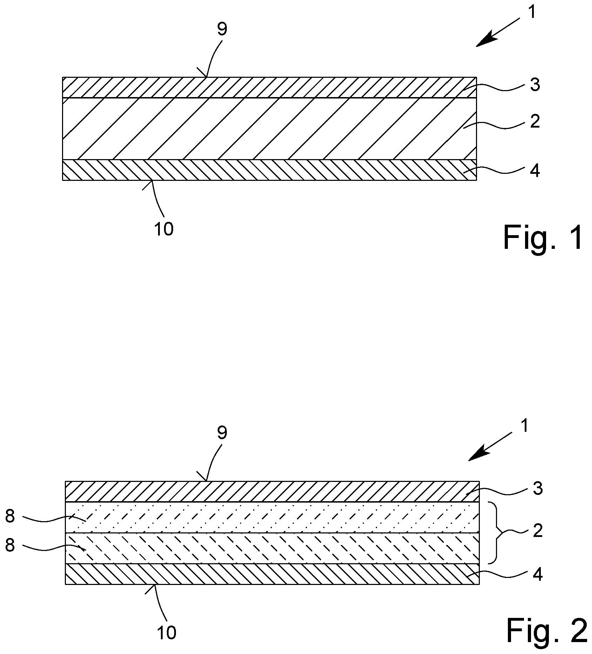

Fig. 1 zeigt eine Verbundfolie 1 mit einer äußeren Trägerschicht 3 und einer inneren Trägerschicht 4. Zwischen der äußeren Trägerschicht 3 und der inneren Trägerschicht 4 ist eine Funktionsschicht 2 angeordnet. Die dargestellte Verbundfolie 1 ist für den Einsatz in der Bauwirtschaft und zur Verwendung als Baufolie vorgesehen, insbesondere zur Gebäudeabdeckung und/oder zur Verwendung als Dachbahn.

Die in Fig. 1 dargestellte Funktionsschicht 2 ist als wenigstens einlagige Schicht, insbesondere Membranschicht, ausgebildet. Vorzugsweise ist die in Fig. 1 dargestellte Funktionsschicht 2 als monolithische Membranschicht ausgebildet. Unter einer monolithischen Membranschicht wird eine selektiv durchlässige Membranschicht verstanden, die porenfrei bzw. geschlossenzellig ausgebildet ist.

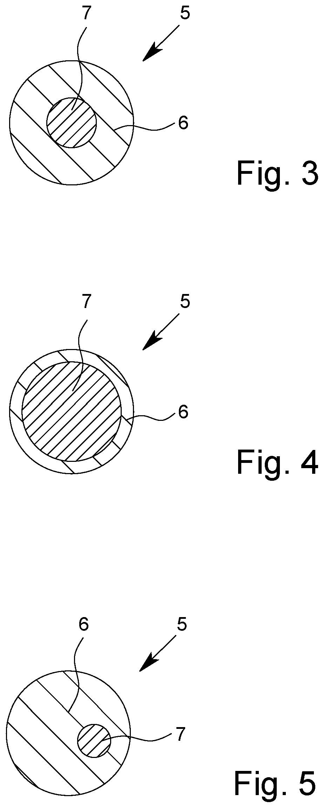

Insbesondere kann die äußere Trägerschicht 3 und/oder die innere Trägerschicht 4 mit der Funktionsschicht 2 fest verbunden sein, insbesondere wobei der Verbund vorzugsweise klebstofffrei ist. Die äußere Trägerschicht 3 und/oder die innere Trägerschicht 4 weist ein Spinnvlies, aufweisend wenigstens eine Bikomponentenfaser 5, auf. Die Bikomponentenfaser 5 ist in den Fig. 3 bis 6 eingehender dargestellt.

Die Funktionsschicht 2 weist als Material Kunststoff und/oder Kunstharz auf. Insbesondere ist ein elastomeres Material und/oder ein thermoplastisches Material vorgesehen. In dem in Fig. 1 dargestellten Ausführungsbeispiel weist die Funktionsschicht 2 einen Polyurethankunststoff auf. Als Polyurethankunststoff der Funktionsschicht 2 ist in dem dargestellten Ausführungsbeispiel ein thermoplastisches Polyurethan (TPU), insbesondere mit hoher Wasseraufnahme und/oder Wasserdampfdiffusionsdurchlässigkeit, vorgesehen. In weiteren Ausführungsformen kann die Funktionsschicht 2 das thermoplastische Polyurethan nicht nur aufweisen, sondern auch daraus bestehen.

Die in Fig. 1 dargestellte Verbundfolie 1 ist wasserdampfdurchlässig, diffusionsoffen und regensicher ausgebildet. In weiteren Ausführungsformen kann die Verbundfolie 1 wasserdampfdurchlässig, diffusionsoffen, winddicht, regensicher, wasserabweisend und/oder wasserdicht ausgebildet sein. Die in Fig. 1 dargestellte Verbundfolie 1 weist einen s_{d}-Wert von weniger als 0,5 m auf. In weiteren Ausführungsformen kann der s_{d}-Wert der Verbundfolie 1 weniger als 0,2 m betragen, vorzugsweise weniger als 0,1 m.

Sofern die Verbundfolie 1 zum Witterungsschutz von Gütern eingesetzt wird, kann die Oberseite 9 der Witterungsseite bzw. der Witterung zugewandt sein, wobei die Unterseite 10 beispielsweise dem Inneren eines Gebäudes zugewandt sein kann. Die Oberseite 9 ist auf der Außenseite der äußeren Trägerschicht 3 angeordnet. Die Unterseite 10 ist auf der gegenüberliegenden Außenseite der Verbundfolie 1 vorgesehen. Grundsätzlich ist es auch möglich, die Verbundfolie 1 nicht der Witterung auszusetzen, wobei die Unterseite 10 dann dem abzudeckenden Gut, Material oder dergleichen zugewandt sein kann.

Fig. 2 zeigt, dass die Funktionsschicht 2 wenigstens zwei Lagen von Membranschichten - das heißt zwei Membranschichtlagen 8 - aufweist. In dem dargestellten Ausführungsbeispiel sind die Membranschichtlagen 8 unterschiedlich voneinander ausgebildet und weisen insbesondere eine sich voneinander unterscheidende Materialzusammensetzung und/oder ein unterschiedliches Flächengewicht auf.

Insbesondere sind die Membranschichtlagen 8 fest miteinander verbunden.

Die Fig. 3 bis 5 zeigen Querschnittsansichten beispielhafter erfindungsgemäßer Bikomponentenfasern 5. Die dargestellten Bikomponentenfasern 5 weisen jeweils eine erste Komponente 6 und eine zweite Komponente 7 auf. Bei den in Fig. 3 bis 5 dargestellten Bikomponentenfasern mit einer Kern-Mantel-Struktur umgibt die zweite Komponente 7 die erste Komponente 6 und bildet so die äußere Oberfläche, d.h. den Mantel, der Bikomponentenfaser 5. Dabei weisen die dargestellten Bikomponentenfasern 5 im Querschnitt eine, zumindest annähernd, kreisförmige bzw. -runde Geometrie auf.

In weiteren, nicht dargestellten Ausführungsformen kann die Bikomponentenfaser 5 auch nicht kreisförmige Querschnitte, beispielsweise einen trilobalen Querschnitt oder andere multilobale Querschnitte, aufweisen.

Bei einem sehr dünnen Mantel der Bikomponentenfaser 5, der die erste Komponente 6 umgibt, kann es durchaus vorkommen, dass der Mantel Defekte aufweist. Das heißt, der Mantel umgibt den Kern nicht vollständig, sondern ist an einigen Stellen durchbrochen, so dass der Kern an diesen Stellen auch die äußere Oberfläche der Faser bildet. Auch bei derartigen Fasern handelt es sich um "Kern-Mantel-Fasern". Insbesondere bildet bei derartigen Fasern die den durchbrochenen Mantel bildende Komponente im Sinne der vorliegenden Erfindung die äußere Oberfläche der Faser.

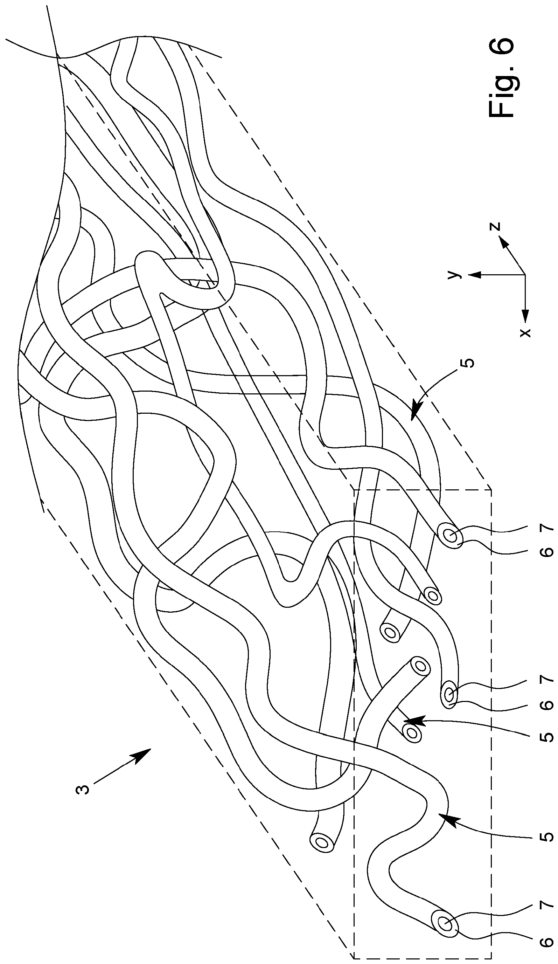

In Fig. 6 ist dargestellt, wie eine Vielzahl beispielhafter Bikomponentenfasern 5 ein Spinnvlies bilden. Das Spinnvlies ist in dem dargestellten Ausführungsbeispiel als äußere Trägerschicht 3 ausgebildet. Auch die innere Trägerschicht 4 kann als ein in Fig. 6 dargestelltes Spinnvlies ausgebildet sein. Dabei bildet das Spinnvlies eine Bahn mit einer Querrichtung X, einer Dickenrichtung Y und einer Längenrichtung Z, die auch als Maschinenrichtung bezeichnet wird.

Ein beispielhaftes Spinnvlies kann aus Bikomponentenfasern 5 hergestellt sein, die mittels Auf- bzw. Coextrusion verbunden und/oder eines Kalanders thermisch verfestigt wurden. Die Bikomponentenfasern 5 sind in dem dargestellten Ausführungsbeispiel als Kern-Mantel-Fasern mit einem Kern aus der ersten Komponente 6, insbesondere mit einem thermoplastischen Kunststoff, vorzugsweise ausgewählt aus der Gruppe der Polyolefine, der Polyester und/oder deren Mischungen, dargestellt.

Weiterhin weist die Bikomponentenfaser des Ausführungsbeispiels einen Mantel, gebildet aus der zweiten Komponente 7, auf, insbesondere wobei die zweite Komponente 7 ein Polymer ausgewählt aus der Gruppe der aliphatischen und/oder aromatischen Polyurethane, insbesondere des Ether-Typs, des Ester-Typs, des Carbonat-Typs aufweist.

Die Bikomponentenfasern, die das beispielhafte Spinnvlies bilden, sind weiterhin so beschaffen, dass der Massenanteil der ersten Komponente, insbesondere des ersten Polymers, 50 bis 98 Gew. %, insbesondere 60 bis 95 Gew. %, vorzugsweise 70 bis 95 Gew. %, bevorzugt 80 bis 90 Gew. %, bezogen auf die Gesamtmasse der Bikomponentenfaser, beträgt.

Gleichsam kann die Bikomponetnefaser so beschaffen sein, dass der Massenanteil der zweiten Komponente, insbesondere des zweiten Polymers, 2 bis 50 Gew. %, insbesondere 5 bis 40 Gew. %, vorzugsweise 5 bis 30 Gew. %, bevorzugt 10 bis 20 Gew. %, bezogen auf die Gesamtmasse der Bikomponentenfaser, beträgt.

Nicht dargestellt ist, dass die erste Komponente 6 und/oder die zweite Komponente 7 ein Additiv aufweisen kann. Bei dem Additiv kann es sich um ein primäres oder sekundäres Antioxidans, einen UV-Absorber, einen UV-Stabilisator, einen Flammhemmer, ein Antistatikum, ein Gleitmittel, einen Metalldesaktivator, ein Hydrophilierungsmittel, ein Hydrophobierungsmittel, ein Anti-Fogging-Additiv und/oder ein Biozid handeln.

### Ausführungsbeispiele:

### 1. Herstellung von Spinnvliesen:

### Vergleichsbeispiel 1 (nicht erfindungsgemäß):

Auf einer Spinnvliesanlage der Firma Reifenhäuser vom Typ "Reicofil 3" wird ein Polypropylen (PP) -Monokomponentenfaserspinnvlies mit einem Flächengewicht von 55 g/m² hergestellt und thermisch verfestigt. Hierfür wird ein mittels Ziegler-Natta Katalysator hergestelltes PP eingesetzt.

### Vergleichsbeispiel 2 (nicht erfindungsgemäß):

Auf einer Spinnvliesanlage der Firma Reifenhäuser vom Typ "Reicofil 4" wird ein PP-Bikomponentenfaserspinnvlies mit Kern-Mantelstruktur mit einem Flächengewicht von 55 g/m² hergestellt und thermisch verfestigt. Hierfür wird ein mittels Ziegler-Natta Katalysator hergestelltes PP im Kern und ein mittels Metallocen-Katalysator hergestelltes PP im Mantel eingesetzt. Das Verhältnis Kern : Mantel beträgt 80 : 20 Gew.-%.

### Erfindungsgemäßes Beispiel 3:

Auf einer Spinnvliesanlage der Firma Reifenhäuser vom Typ "Reicofil 4" wird ein PP/TPU-Bikomponentenfaserspinnvlies mit Kern-Mantelstruktur und einem Flächengewicht von 55 g/m² hergestellt und thermisch verfestigt. Hierfür wird ein mittels Ziegler-Natta Katalysator hergestelltes PP im Kern eingesetzt und ein aromatisches Ether-TPU (Shore-Härte ca. 95A) im Mantel eingesetzt. Das Verhältnis Kern : Mantel beträgt 80 : 20 Gew.-%.

### Erfindungsgemäßes Beispiel 4:

Auf einer Spinnvliesanlage der Firma Reifenhäuser vom Typ "Reicofil 4" wird ein PP/TPU-Bikomponentenfaserspinnvlies mit Kern-Mantelstruktur mit einem Flächengewicht von 55 g/m² hergestellt und thermisch verfestigt. Hierfür wird ein mittels Ziegler-Natta Katalysator hergestelltes PP im Kern eingesetzt und ein aromatisches Ether-TPU (Shore-Härte ca. 54D) im Mantel eingesetzt. Das Verhältnis Kern : Mantel beträgt 80 : 20 Gew.-%.

### 2. Mechanische Eigenschaften der Spinnvliese:

Die mechanischen Eigenschaften der Spinnvliese aus den Vergleichsbeispielen (Vgl.bsp.) 1 und 2 sowie den erfindungsgemäßen Beispielen (Bsp.) 3 und 4 sind in der folgenden Tabelle dargestellt:

**Tabelle 1: Eigenschaften der Spinnvliese aus den Beispielen 1 bis 4:**

| | RKMD [N/5cm] | RKCD [N/5cm] | RD MD [%] | RD CD [%] | NAK CD [N] | NAK CD [N] |
|---|---|---|---|---|---|---|
| Vgl.bsp. 1 | 118 | 85 | 70 | 73 | 82 | 99 |
| Vgl.bsp. 2 | 144 | 105 | 81 | 77 | 112 | 143 |
| Bsp. 3 | 150 | 108 | 101 | 106 | 99 | 119 |
| Bsp. 4, | 161 | 119 | 98 | 104 | 95 | 121 |

| | | | | | | |
|---|---|---|---|---|---|---|
| Legende: RK = Reißkraft, bestimmt nach DIN EN 12311-1 NAK = Nagelausreißkraft, bestimmt nach DIN EN 12310-1 RD = Reißdehnung MD = Maschinenrichtung CD = Querrichtung | | | | | | |

Anhand der erhaltenen Messwerte kann eindeutig erkannt werden, dass erfindungsgemäße Spinnvliese gegenüber den Spinnvliesen aus den Vergleichsbeispielen überlegene Eigenschaften aufweisen, insbesondere im Hinblick auf die Festigkeit und gleichzeitige Dehnfähigkeit der Spinnvliese. Erfindungsgemäße Spinnvliese vereinen diese eigentlich im Widerspruch zueinanderstehenden Materialeigenschaften auf vorteilhafte Weise, wozu insbesondere die spezifische Materialkombination im Rahmen der vorliegenden Erfindung maßgeblich beiträgt. So können im Rahmen der vorliegenden Erfindung sowohl insbesondere besonders feste bzw. stabile als auch insbesondere dehnfähige und mechanisch belastbare Spinnvliese erhalten werden.

Aus den erhaltenen Spinnvliesen entsprechend den Vergleichsbeispielen 1 und 2 sowie den erfindungsgemäßen Beispielen 3 und 4 werden in den folgenden Beispielen Verbundfolien hergestellt.

### 3. Herstellung von Verbundfolien:

### Vergleichsbeispiel 5 (nicht erfindungsgemäß):

Vor der Beschichtung mit einer Funktionsschicht bzw. vor einer Extrusion der Funktionsschicht auf das bzw. die Spinnvlies, werden zwei PP-Bikomponentenfaserspinnvliesen aus Vergleichsbeispiel 2 einer Corona-Vorbehandlung unterzogen. Zwischen die zwei so behandelten PP-Bikomponentenfaserspinnvliese, die jeweils eine Grammatur von etwa 55 g/m² aufweisen, wird in einem Extrusionsprozess eine Funktionsschicht mit ca. 30 g/m² TPU eingebettet. Als TPU bzw. thermoplastisches Polyurethan ist ein aromatisches C4-Ether-TPU vorgesehen. Nach Extrusion der Funktionsschicht auf bzw. zwischen die PP-Bikomponentenfaserspinnvliese als Trägerschicht wird der Schichtaufbau aus den Trägerschichten (PP-Spinnvliese) und der Funktionsschicht verpresst.

Durch diesen Aufbau wird folglich eine ein thermoplastisches Polyurethan aufweisende Funktionsschicht zwischen zwei PP- Bikomponentenfaserspinnvliese als Trägerschichten angeordnet. Es wird kein Klebstoff zur Verbindung der Funktionsschicht und der PP-Bikomponentenfaserspinnvliese verwendet.

### Vergleichsbeispiel 6 (nicht erfindungsgemäß):

Zwei PP-Bikomponentenfaserspinnvliese aus Vergleichsbeispiel 2, welche jeweils eine Grammatur von etwa 55 g/m² aufweisen, werden im Vorfeld der Beschichtung mit bzw. der Extrusion einer Funktionsschicht einer Corona-Vorbehandlung unterzogen. Anschließend werden mittels einer Rasterwalze (ca. 20 % Flächenbedeckung) auf jedes Vlies jeweils ca. 5 g/m² eines aufgeschmolzenen Klebstoffes (Hotmelt-Klebstoff) aufgebracht. Es werden also die Klebstoffschichten auf der Trägerschicht (PP-Bikomponentenfaserspinnvliese) angeordnet.

Anschließend wird zwischen den zwei so behandelten PP-Bikomponentenfaserspinnvliesen in einem Extrusionsprozess eine Funktionsschicht mit ca. 30 g/m² TPU eingebettet. Als TPU bzw. thermoplastisches Polyurethan ist ein aromatischer C4-Ether-TPU vorgesehen. Nach Extrusion der Funktionsschicht wird der Schichtaufbau aus den Trägerschichten (PP-Bikomponentenfaserspinnvliese) und der Funktionsschicht (C4-Ether-TPU) verpresst.

Im Ergebnis wird damit eine ein thermoplastisches Polyurethan aufweisende Funktionsschicht zwischen zwei PP-Bikomponentenfaserspinnvliese verklebt.

### Erfindungsgemäßes Beispiel 7:

Zwischen zwei PP/TPU-Bikomponentenfaserspinnvliesen aus Beispiel 3, die jeweils eine Grammatur von etwa 55 g/m² aufweisen, wird in einem Extrusionsprozess eine Funktionsschicht mit ca. 30 g/m² TPU eingebettet. Als thermoplastisches Polyurethan ist ein aromatischer C4-Ether-TPU vorgesehen. Nach Extrusion der Funktionsschicht wird der Schichtaufbau aus den Trägerschichten (PP/TPU-Bikomponentenfaserspinnvliese) und der Funktionsschicht (C4-Ether-TPU) verpresst.

Vor der Beschichtung mit bzw. vor der Extrusion der Funktionsschicht werden die Vliese *keiner* Corona-Vorbehandlung unterzogen und er wird auch *kein* Klebstoff aufgebracht.

Durch diesen Aufbau wird demnach eine ein thermoplastisches Polyurethan aufweisende Funktionsschicht zwischen zwei erfindungsgemäßen PP/TPU-Bikomponentenfaserspinnvliesen angeordnet, sodass eine erfindungsgemäße Verbundfolie erhalten wird.

### Erfindungsgemäßes Beispiel 8:

Zwischen zwei PP/TPU-Bikomponentenfaserspinnvliesen aus Beispiel 4, die jeweils eine Grammatur von etwa 55 g/m² aufweisen, wird in einem Extrusionsprozess eine Funktionsschicht mit ca. 30 g/m² TPU eingebettet. Als TPU bzw. thermoplastisches Polyurethan ist ein aromatischer C4-Ether-TPU vorgesehen. Nach Extrusion der Funktionsschicht wird der Schichtaufbau aus den Trägerschichten (PP/TPU-Bikomponentenfaserspinnvlies) und der Funktionsschicht (C4-Ether-TPU) verpresst.

Vor der Beschichtung mit bzw. vor der Extrusion der Funktionsschicht werden die Vliese *keiner* Corona-Vorbehandlung unterzogen und er wird auch *kein* Klebstoff aufgebracht.

Mittels dieses Aufbaus wird folglich eine ein thermoplastisches Polyurethan aufweisende Funktionsschicht zwischen zwei erfindungsgemäßen PP/TPU-Bikomponentenfaserspinnvliesen angeordnet und somit eine erfindungsgemäße Verbundfolie erhalten.

### 4. Physikalische und mechanische Eigenschaften der Verbundfolien:

Der s_{d}-Wert, welcher die Wasserdampfdurchlässigkeit angibt, wird nach EN 12572 (Stand: Februar 2019) gemessen.

Die Verbundhaftung der einzelnen Lagen (Spinnvlies-Trägerschichten zu TPU-Funktionsschicht) miteinander wird durch Schälprüfungen nach DIN53357 der erzeugten Muster gemessen. Außerdem wird die Verbundhaftung nach 24 Wochen Alterung bei 70°C und 90% rel. Feuchte gemessen.

Es sind die nachfolgenden Versuchsergebnisse ermittelt worden:

**Tabelle 2: Physikalische Eigenschaften der Verbundfolien aus den Bsp. 5 bis 8**

| | s_{d} - Wert [m] | Verbundhaftung (Schälprüfung) [N/5cm] | Verbundhaftung (Schälprüfung) nach Alterung [N/5cm] | Wassersäule [m] |
|---|---|---|---|---|
| Vgl.bsp. 5 | 0,053 | Keine Haftung | Keine Haftung | 3,4 |
| Vgl.bsp. 6 | 0,128 | 9 | 0,8 | 6,4 |
| Bsp. 7 | 0,076 | 19 | 18,5 | 7,3 |
| Bsp. 8 | 0,071 | Nicht trennbar (Vliesbruch) | Nicht trennbar (Vliesbruch) | 7,9 |

An Hand diese Versuchsergebnisse können die erfindungsgemäßen Vorteile von Verbundfolien nach der vorliegenden Erfindung deutlich erkannt werden.

Für das Vergleichsbeispiel 5 kann zwar einen sehr niedrigen s_{d}-Wert von 0,05 m festgestellt werden, allerdings ist die Verbundhaftung als mangelhaft zu beurteilen.

Für das Vergleichsbeispiel 6 wird zwar eine bessere Verbundhaftung vor Alterung erreicht, diese nimmt jedoch im Zuge der Alterung deutlich ab. Darüber hinaus ist vor allem der s_{d}-Wert deutlich höher ausgebildet, d.h. die Wasserdampfdurchlässigkeit wird durch die Verwendung von zusätzlichem Klebstoff nachteilig beeinflusst.

Die erfindungsgemäßen Beispiele für Verbundfolien hingegen weisen sowohl vor als auch nach der Alterung eine hervorragende Verbundhaftung auf. Gleichzeitig kann für die erfindungsgemäßen Verbundfolien ein niedriger s_{d}-Wert ermittelt werden. Im Rahmen der vorliegenden Erfindung kann mit den erfindungsgemäßen Verbundfolien somit eine gute Verbundhaftung auch noch nach der Alterung bei einem gleichzeitig sehr niedrigen s_{d}-Wert sichergestellt werden, insbesondere ohne, dass eine Vorbehandlung der Spinnvliese bzw. eine Verwendung von Klebstoff notwendig ist.

Die mechanischen Eigenschaften der Verbundfolien 6-8 sind in der folgenden Tabelle dargestellt:

**Tabelle 3: Mechanische Eigenschaften der Verbundfolien aus den Bsp. 6 bis 8**

| | RKMD [N/5cm] | RKCD [N/5cm] | NAK MD [N] | NAK CD [N] |
|---|---|---|---|---|
| Vgl.bsp. 6 | 338 | 251 | 219 | 274 |
| Bsp. 7 | 360 | 261 | 202 | 240 |
| Bsp. 8 | 386 | 288 | 199 | 243 |

| | | | | |
|---|---|---|---|---|
| Legende: RK = Reißkraft, bestimmt nach DIN EN 12311-1 NAK = Nagelausreißkraft, bestimmt nach DIN EN 12310-1 MD = Maschinenrichtung CD = Querrichtung | | | | |

Wie in Tabelle 3 zu erkennen ist, zeichnen sich die erfindungsgemäßen Verbundfolien zusätzlich zu den oben dargestellten vorteilhaften physikalischen Eigenschaften insbesondere auch durch als positiv zu bewertende mechanische Eigenschaften aus. Insbesondere im Hinblick auf die Reißfestigkeit weisen erfindungsgemäße Verbundfolien ein gegenüber herkömmlichen Verbundfolien vorteilhaftes Verhalten und vorzugsweise eine höhere Stabilität und Belastbarkeit auf. Dies ist insbesondere bemerkenswert, da die Verbundfolien nach den Beispielen 7 und 8 ohne eine Vorbehandlung der Spinnvliese bzw. eine Verwendung von Klebstoffen auskommen, wie sie im Stand der Technik üblicherweise vorgesehen sind. Damit vereinen erfindungsgemäße Verbundfolien insgesamt die Vorteile einer vergleichsweise leichteren bzw. weniger aufwändigen Herstellung mit einem gegenüber herkömmlichen Folien als überlegen zu wertenden Eigenschaftsprofil.

### Bezugszeichenliste:

- 1: Verbundfolie
- 2: Funktionsschicht
- 3: äußere Trägerschicht
- 4: innere Trägerschicht
- 5: Bikomponentenfasern
- 6: erste Komponente
- 7: zweite Komponente
- 8: Membranschichtenlagen
- 9: Oberseite
- 10: Unterseite

## Patentansprüche

1. Spinnvlies, aufweisend wenigstens eine Bikomponentenfaser aus einer ersten Komponente und einer zweiten Komponente, wobei die erste Komponente ein erstes Polymer und die zweite Komponente ein sich vom ersten Polymer unterscheidendes zweites Polymer als Bestandteil aufweist,
**dadurch gekennzeichnet,**
**dass** das erste Polymer und/oder das zweite Polymer ein thermoplastisches Polyurethan enthält und/oder hieraus besteht.

2. Spinnvlies nach Anspruch 1, **dadurch gekennzeichnet, dass** die Bikomponentenfaser zumindest im Wesentlichen eine Kern-Mantel-Struktur aufweist, insbesondere eine Kern-Mantel-Struktur aufweist.

3. Spinnvlies nach Anspruch 1 oder 2, **dadurch gekennzeichnet, dass** die Bikomponentenfaser einen Kern gebildet aus der ersten Komponente und einen Mantel gebildet aus der zweiten Komponente aufweist.

4. Spinnvlies nach einem der Ansprüche 1 bis 3, **dadurch gekennzeichnet, dass** das erste Polymer einen thermoplastischen Kunststoff, insbesondere ausgewählt aus der Gruppe der Polyolefine, der Polyester und deren Mischungen, aufweist, vorzugsweise hieraus besteht.

5. Spinnvlies nach Anspruch 4, **dadurch gekennzeichnet, dass** das Polyolefin ausgewählt ist aus der Gruppe der Polyolefin-Homopolymere, insbesondere aus Polyethylen, Polypropylen, Polybutylen, Polyhexylen, vorzugsweise Polyethylen, Polypropylen, der Polyolefin-Copolymere, insbesondere aus Ethylen-Copolymeren, Propylen-Copolymeren, Butylen-Copolymeren, Hexylen-Copolymeren, vorzugsweise Ethylen-Copolymeren, Propylen-Copolymeren, und deren Mischungen.

6. Spinnvlies nach Anspruch 4, **dadurch gekennzeichnet, dass** der Polyester ausgewählt ist aus Polymeren der Terephthalsäure, insbesondere Copolymeren der Terephthalsäure, vorzugsweise PET ist.

7. Spinnvlies nach einem der vorangehenden Ansprüche, **dadurch gekennzeichnet, dass** das zweite Polymer ausgewählt ist aus der Gruppe der aliphatischen und/oder aromatischen Polyurethane, insbesondere des Ether-Typs, des Polyester-Typs, des Carbonat-Typs, und deren Mischungen, insbesondere der aliphatischen und/oder aromatischen Polyurethane des Ether-Typs, des Carbonat-Typs, und deren Mischungen, vorzugsweise der aliphatischen und/oder aromatischen Polyurethane des Ether-Typs, bevorzugt der aromatischen Polyurethane des Ether-Typs.

8. Spinnvlies nach einem der vorangehenden Ansprüche, **dadurch gekennzeichnet, dass** der Massenanteil der ersten Komponente, insbesondere des ersten Polymers, 50 bis 98 Gew.-%, insbesondere 60 bis 95 Gew.-%, vorzugsweise 70 bis 95 Gew.-%, bevorzugt 80 bis 90 Gew.-%, bezogen auf die Gesamtmasse der Bikomponentenfaser, beträgt.

9. Spinnvlies nach einem der vorangehenden Ansprüche, **dadurch gekennzeichnet, dass** der Massenanteil der zweiten Komponente, insbesondere des zweiten Polymers, 2 bis 50 Gew.-%, insbesondere 5 bis 40 Gew.-%, vorzugsweise 5 bis 30 Gew.-%, bevorzugt 10 bis 20 Gew.-%, bezogen auf die Gesamtmasse der Bikomponentenfaser, beträgt.

10. Spinnvlies nach einem der vorangehenden Ansprüche, **dadurch gekennzeichnet, dass** das Spinnvlies ein Flächengewicht im Bereich von 50 bis 300 g/m², insbesondere von 80 bis 150 g/m², bevorzugt von 100 und 120 g/m², aufweist.

11. Verbundfolie, aufweisend mindestens eine Trägerschicht aus einem Spinnvlies nach einem der vorangehenden Ansprüche sowie mindestens eine, insbesondere wasserdichte und wasserdampfdurchlässige, Funktionsschicht.

12. Verbundfolie nach Anspruch 11, **dadurch gekennzeichnet, dass** die mindestens eine Funktionsschicht auf der mindestens einen Trägerschicht angeordnet, vorzugsweise zwischen zwei Trägerschichten angeordnet, ist.

13. Verbundfolie nach Anspruch 11 oder 12, **dadurch gekennzeichnet, dass** die Funktionsschicht als monolithische Membranschicht und/oder als mikroporöse Membranschicht, insbesondere als monolithische Membranschicht, ausgebildet ist.

14. Verbundfolie nach einem der Ansprüche 11 bis 13, **dadurch gekennzeichnet, dass** die Funktionsschicht ein thermoplastisches Polyurethan enthält, insbesondere hieraus besteht.

15. Verbundfolie nach Anspruch 14, **dadurch gekennzeichnet, dass** das thermoplastische Polyurethan der Funktionsschicht ausgewählt ist aus der Gruppe der aliphatischen und/oder aromatischen Polyurethane, insbesondere des Ether-Typs, des Polyester-Typs, des Carbonat-Typs, und deren Mischungen, insbesondere der aliphatischen und/oder aromatischen Polyurethane des Carbonat-Typs, vorzugsweise der aromatischen Polyurethane des Carbonat-Typs.

16. Verbundfolie nach einem der vorangehenden Ansprüche, **dadurch gekennzeichnet, dass** die Funktionsschicht ein Flächengewicht im Bereich von 5 bis 150 g/m², insbesondere von 20 bis 100 g/m², vorzugsweise 30 bis 80 g/m², aufweist.

17. Verbundfolie nach einem der vorangehenden Ansprüche, **dadurch gekennzeichnet, dass** die Funktionsschicht als mehrlagige Folie ausgebildet ist, insbesondere eine erste und eine zweite Lage aufweist, vorzugsweise eine erste und eine zweite Lage in Form monolithischer Schichten aufweist.

18. Verbundfolie nach einem der vorangehenden Ansprüche, **dadurch gekennzeichnet, dass** die Verbindung zwischen Funktionsschicht und Trägerschicht zumindest im Wesentlichen, insbesondere vollständig, klebstofffrei ist und/oder die Funktionsschicht unmittelbar auf die Trägerschicht aufextrudiert ist, insbesondere die Trägerschicht durch Extrusion mit der Funktionsschicht beschichtet und fest verbunden ist, bevorzugt die Funktionsschicht durch Coextrusion, insbesondere durch Mehrschicht-Coextrusion, unmittelbar auf die Trägerschicht aufgebracht ist.

19. Verwendung einer Verbundfolie nach einem der Ansprüche 11 bis 18 im Baubereich, insbesondere als Dach- oder Fassadenbahn, insbesondere als Dachunterspannbahn, Unterdeckbahn oder Fassadenbahn.

## Claims

1. A spunbonded nonwoven comprising at least one bicomponent fiber of a first component and a second component, the first component comprising a first polymer and the second component comprising a second polymer different from the first polymer as a constituent,
**characterized in that**
the first polymer and/or the second polymer contains and/or consists of a thermoplastic polyurethane.

2. The spunbonded nonwoven according to claim 1, **characterized in that** the bicomponent fiber has at least substantially a core-sheath structure, in particular has a core-sheath structure.

3. A spunbonded nonwoven according to claim 1 or 2, **characterized in that** the bicomponent fiber comprises a core formed from the first component and a sheath formed from the second component.

4. Spunbonded nonwoven according to any one of claims 1 to 3, **characterized in that** the first polymer comprises a thermoplastic, in particular selected from the group of polyolefins, polyesters and mixtures thereof, preferably consisting thereof.

5. Spunbonded nonwoven according to claim 4, **characterized in that** the polyolefin is selected from the group of polyolefin homopolymers, in particular polyethylene, polypropylene, polybutylene, polyhexylene, preferably polyethylene, polypropylene, of polyolefin copolymers, in particular ethylene copolymers, propylene copolymers, butylene copolymers, hexylene copolymers, preferably ethylene copolymers, propylene copolymers, and mixtures thereof.

6. Spunbonded nonwoven according to claim 4, **characterized in that** the polyester is selected from polymers of terephthalic acid, in particular copolymers of terephthalic acid, preferably PET.

7. Spunbonded nonwoven according to one of the preceding claims, **characterized in that** the second polymer is selected from the group of aliphatic and/or aromatic polyurethanes, in particular of the ether type, polyester type, carbonate type, and mixtures thereof, in particular of aliphatic and/or aromatic polyurethanes of the ether type, carbonate type, and mixtures thereof, preferably of aliphatic and/or aromatic polyurethanes of the ether type, preferably of aromatic polyurethanes of the ether type.

8. Spunbonded nonwoven according to one of the preceding claims, **characterized in that** the mass fraction of the first component, in particular of the first polymer, is 50 to 98% by weight, in particular 60 to 95% by weight, preferably 70 to 95% by weight, preferably 80 to 90% by weight, based on the total mass of the bicomponent fiber.

9. Spunbonded nonwoven according to one of the preceding claims, **characterized in that** the mass fraction of the second component, in particular of the second polymer, is 2 to 50% by weight, in particular 5 to 40% by weight, preferably 5 to 30% by weight, preferably 10 to 20% by weight, based on the total mass of the bicomponent fiber.

10. Spunbonded nonwoven according to one of the preceding claims, **characterized in that** the spunbonded nonwoven has a basis weight in the range from 50 to 300 g/m², in particular from 80 to 150 g/m², preferably from 100 and 120 g/m .²

11. Composite film comprising at least one carrier layer of a spunbonded nonwoven according to one of the preceding claims and at least one, in particular waterproof and o water vapor permeable, functional layer.

12. Composite film according to claim 11, **characterized in that** the at least one functional layer is arranged on the at least one carrier layer, preferably arranged between two carrier layers.

13. Composite film according to claim 11 or 12, **characterized in that** the functional layer is formed as a monolithic membrane layer and/or as a microporous membrane layer, in particular as a monolithic membrane layer.

14. Composite film according to any one of claims 11 to 13, **characterized in that** the functional layer comprises a thermoplastic polyurethane, in particular consists thereof.

15. Composite film according to claim 14, **characterized in that** the thermoplastic polyurethane of the functional layer is selected from the group of aliphatic and/or aromatic polyurethanes, in particular of the ether type, the polyester type, the carbonate type, and mixtures thereof, in particular of the aliphatic and/or aromatic polyurethanes of the carbonate type, preferably of the aromatic polyurethanes of the carbonate type.

16. Composite film according to one of the preceding claims, **characterized in that** the functional layer has a basis weight in the range from 5 to 150 g/m², in particular from 20 to 100 g/m², preferably 30 to 80 g/m².

17. Composite film according to one of the preceding claims, **characterized in that** the functional layer is formed as a multilayer film, in particular has a first and a second layer, preferably has a first and a second layer in the form of monolithic layers.

18. Composite film according to one of the preceding claims, **characterized in that** the bond between the functional layer and the carrier layer is at least substantially, in particular completely, adhesive-free and/or the functional layer is extruded directly onto the carrier layer, in particular the carrier layer is coated and firmly bonded to the functional layer by extrusion, preferably the functional layer is applied directly to the carrier layer by coextrusion, in particular by multilayer coextrusion.

19. Use of a composite sheet according to any one of claims 11 to 18 in the construction sector, in particular as a roofing or facade sheet, in particular as a roofing underlayment sheet, sarking sheet or facade sheet.

## Revendications

1. Tissu non tissé comprenant au moins une fibre bicomposante d'un premier composant et d'un second composant, dans lequel le premier composant comprend un premier polymère et le second composant comprend un second polymère différent du premier polymère en tant que composant,
**caractérisé**
**en ce que** le premier polymère et/ou le deuxième polymère contient et/ou est constitué d'un polyuréthane thermoplastique.

2. Non-tissé selon la revendication 1, **caractérisé en ce que** la fibre bicomposante présente au moins essentiellement une structure âme-gaine, en particulier une structure âme-gaine.

3. Non-tissé selon la revendication 1 ou 2, **caractérisé en ce que** la fibre bicomposante comprend une âme formée du premier composant et une gaine formée du second composant.

4. Non-tissé selon l'une des revendications 1 à 3, **caractérisé en ce que** le premier polymère présente, de préférence est constitué d'une matière thermoplastique, en particulier choisie dans le groupe des polyoléfines, des polyesters et de leurs mélanges.

5. Non-tissé selon la revendication 4, **caractérisé en ce que** la polyoléfine est choisie dans le groupe des homopolymères de polyoléfine, en particulier parmi le polyéthylène, le polypropylène, le polybutylène, le polyhexylène, de préférence le polyéthylène, le polypropylène, des copolymères de polyoléfine, en particulier parmi les copolymères d'éthylène, les copolymères de propylène, les copolymères de butylène, les copolymères d'hexylène, de préférence les copolymères d'éthylène, les copolymères de propylène, et leurs mélanges.

6. Non-tissé selon la revendication 4, **caractérisé en ce que** le polyester est choisi parmi les polymères de l'acide téréphtalique, en particulier les copolymères de l'acide téréphtalique, de préférence le PET.

7. Non-tissé selon l'une des revendications précédentes, **caractérisé en ce que** le deuxième polymère est choisi dans le groupe des polyuréthanes aliphatiques et/ou aromatiques, en particulier de type éther, de type polyester, de type carbonate, et leurs mélanges, en particulier des polyuréthanes aliphatiques et/ou aromatiques de type éther, de type carbonate, et leurs mélanges, de préférence des polyuréthanes aliphatiques et/ou aromatiques de type éther, de préférence des polyuréthanes aromatiques de type éther.

8. Non-tissé selon l'une des revendications précédentes, **caractérisé en ce que** la proportion en masse du premier composant, en particulier du premier polymère, est de 50 à 98 % en masse, en particulier de 60 à 95 % en masse, de préférence de 70 à 95 % en masse, de préférence de 80 à 90 % en masse, par rapport à la masse totale de la fibre bicomposante.

9. Non-tissé selon l'une des revendications précédentes, **caractérisé en ce que** la proportion en masse du deuxième composant, en particulier du deuxième polymère, est de 2 à 50 % en masse, en particulier de 5 à 40 % en masse, de préférence de 5 à 30 % en masse, de préférence de 10 à 20 % en masse, par rapport à la masse totale de la fibre bicomposante.

10. Non tissé selon l'une des revendications précédentes, **caractérisé en ce que** le non tissé présente un poids par unité de surface dans la plage de 50 à 300 g/m², en particulier de 80 à 150 g/m², de préférence de 100 et 120 g/m².

11. Film composite, présentant au moins une couche de support en un non-tissé selon l'une des revendications précédentes ainsi qu'au moins une couche fonctionnelle, en particulier étanche à l'eau et perméable à la vapeur d'eau.

12. Film composite selon la revendication 11, **caractérisé en ce que** la au moins une couche fonctionnelle est disposée sur la au moins une couche de support, de préférence disposée entre deux couches de support.

13. Film composite selon la revendication 11 ou 12, **caractérisé en ce que** la couche fonctionnelle est conçue comme une couche de membrane monolithique et/ou comme une couche de membrane microporeuse, en particulier comme une couche de membrane monolithique.

14. Film composite selon l'une quelconque des revendications 11 à 13, **caractérisé en ce que** la couche fonctionnelle contient un polyuréthane thermoplastique, en particulier en est constitué.

15. Film composite selon la revendication 14, **caractérisé en ce que** le polyuréthane thermoplastique de la couche fonctionnelle est choisi dans le groupe des polyuréthanes aliphatiques et/ou aromatiques, en particulier de type éther, de type polyester, de type carbonate, et de leurs mélanges, en particulier des polyuréthanes aliphatiques et/ou aromatiques de type carbonate, de préférence des polyuréthanes aromatiques de type carbonate.

16. Film composite selon l'une des revendications précédentes, **caractérisé en ce que** la couche fonctionnelle présente un poids surfacique dans la plage de 5 à 150 g/m², en particulier de 20 à 100 g/m², de préférence de 30 à 80 g/m².

17. Film composite selon l'une des revendications précédentes, **caractérisé en ce que** la couche fonctionnelle est réalisée sous forme de film multicouche, en particulier présente une première et une deuxième couche, de préférence présente une première et une deuxième couche sous forme de couches monolithiques.

18. Feuille composite selon l'une des revendications précédentes, **caractérisée en ce que** la liaison entre la couche fonctionnelle et la couche de support est au moins essentiellement, en particulier complètement, exempte d'adhésif et/ou la couche fonctionnelle est directement extrudée sur la couche de support, en particulier la couche de support est revêtue par extrusion avec la couche fonctionnelle et est reliée solidement, de préférence la couche fonctionnelle est appliquée directement sur la couche de support par coextrusion, en particulier par coextrusion multicouche.

19. Utilisation d'un film composite selon l'une des revendications 11 à 18 dans le domaine de la construction, en particulier comme membrane de toiture ou de façade, notamment comme membrane de sous-couverture de toiture, membrane de sous-couverture ou membrane de façade.
